# EUROPEAN PATENT SPECIFICATION

(11) **EP 1 834 988 B1**
(45) Date of publication and mention of the grant of the patent: **09.02.2011**
(21) Application number: 05816774.3
(22) Date of filing: 13.12.2005
(51) Int. Cl.: C08L 27/06, C08L 101/00, C08L 51/04, C08F 265/06, C08J 3/21

(54) **THERMOPLASTIC RESIN COMPOSITION**
THERMOPLASTHARZZUSAMMENSETZUNG
COMPOSITION DE RESINE THERMOPLASTIQUE

(30) Priority: 27.12.2004 JP 2004375967; 27.01.2005 JP 2005019501; 28.02.2005 JP 2005052783; 28.02.2005 JP 2005052856; 23.06.2005 JP 2005182817
(43) Date of publication of application: 19.09.2007
(73) Proprietor: Kaneka Corporation, Kita-ku Osaka-shi, Osaka 530-8288 (JP)
(72) Inventor: TERADA, Toru, Takasago-shi Hyogo 6760023 (JP); HONGO, Shinya, Hyogo 6730003 (JP); YAMADA, Hirotsugu, 6550872 (JP); UEDA, Takashi, Kakogawa-shi, Hyogo 6750301 (JP)
(74) Representative: Vossius & Partner
(86) International application number: PCT/JP2005/022821
(87) International publication number: WO 2006/070592

(56) References cited:
- EP-A- 1 142 951
- DE-A1- 10 121 580
- JP-A- 06 116 463
- JP-A- 08 173 385
- JP-A- 52 037 987
- JP-A- 59 084 922
- JP-A- 62 280 247
- JP-A- 2004 300 426
- US-A1- 2004 152 821

## Description

The present invention relates to a thermoplastic resin composition having excellent weather resistance and impact resistance.

In order to improve the impact resistance of thermoplastic resins, addition of graft copolymers produced by emulsion polymerization or suspension polymerization has been widely practical. For example, it is known that a diene or acrylate graft copolymer is mixed in vinyl chloride resins (for example, refer to Patent Document 1).

However, in use of a thermoplastic resin containing a diene graft copolymer, although the impact resistance is improved, the following disadvantage occurs: When molded products are used outdoors, the impact resistance is significantly reduced because of low weather resistance. Consequently, in order to improve weather resistance of dienes and impart impact resistance, as an impact modifier for outdoor use, a graft copolymer mainly composed of an alkyl (meth)acrylate is proposed (for example, refer to Patent Document 2).

In general, since the effect of improving impact resistance by (meth)acrylate rubbers is lower than that by diene rubbers, the amount added to thermoplastic resins must be increased. However, in the field of improving the impact resistance of thermoplastic resins, it is desirable that the content of a graft copolymer serving as an impact modifier be as small as possible in view of the quality and the cost. Studies for improving this point have been carried out for many years (for example, refer to Patent Documents 3 to 5).

Various processes of improving the effect of imparting impact resistance to thermoplastic resins by graft copolymers are known. It is known that, among these, processes of improving the quality and increasing the content of a flexible component in a graft copolymer, for example, a process of decreasing the glass transition temperature of a flexible polymer phase in a graft copolymer and a process of increasing the ratio by weight of a flexible polymer phase in a graft copolymer, are effective to achieve the object. In particular, it is believed that setting the ratio by weight of a flexible polymer to a graft copolymer to at least 90 percent by weight is an effective method for highly imparting the impact resistance.

However, in use of the above method, the particles themselves become sticky. Consequently, when particles of the graft copolymer are isolated from a latex prepared by emulsion polymerization or slurry prepared by suspension polymerization, the particles may be coarsened or agglomerated. If such a resin is blended in a thermoplastic resin, a sufficient effect of improving impact resistance cannot be achieved and, in addition, the resin may cause a defect in appearance of moldings. The reason for this is as follows: Such an impact modifier that is easily coarsened or agglomerated is not homogeneously mixed when blended with thermoplastic resins. Furthermore, when a coarsened or agglomerated impact modifier is blended with thermoplastic resins and is then processed, the impact modifier is not sufficiently dispersed. Such a phenomenon of the dispersion failure has been confirmed by electron microscopy of moldings. Therefore, for example, in the case of vinyl chloride resins, an impact modifier is blended and a step of removing coarsened or agglomerated particles is then generally performed with a sieve or the like before the resulting resin is processed.

Accordingly, products of impact modifiers from which coarsened particles are previously removed are industrially used. In view of the cost, it is advantageous that the amount of coarsened particles is reduced as much as possible in the production of impact modifiers. Thus, it is essential that the glass transition temperature of a flexible polymer phase in a graft copolymer and the ratio by weight of a flexible polymer phase in a graft copolymer be limited.

A known process for isolating a sticky rubbery polymer latex as a resin powder having low stickiness is a process of adding a high-molecular-weight polyanion having a carboxyl group and/or a hydroxyl group in its molecule to a rubber latex, and adding dropwise the mixed latex to an aqueous solution containing at least one alkaline earth metal (for example, refer to Patent Document 6).

However, according to the description of this process, unless at least 2 to 8 parts by weight and preferably 4 to 6 parts by weight of the high-molecular-weight polyanion is added relative to 100 parts by weight of rubber solid component in the rubber latex, the stickiness of the isolated resin powder cannot be suppressed. In general, it is obvious that when 4 parts by weight or more of a foreign matter (i.e., in this case, the high-molecular-weight polyanion) is added to a polymer latex, the original quality of the isolated polymer composition itself usable for various purposes is impaired. In particular, when the above process is applied to a graft copolymer whose content is desirably reduced as much as possible in order to impart impact resistance to thermoplastic resins and the like, the quality, for example, the effect of imparting impact resistance is inevitably degraded. Therefore, the above process is not a satisfactory process.

As a process for isolating a flexible resin having a low Vicat softening temperature from a latex, a technology in which a surfactant is added to suppress the coarsening is disclosed (for example, refer to Patent Document 7). In this process, however, since the ratio of the rigid polymer phase of the outermost part to the resin that can be isolated is limited to at least 10 percent by weight, the exhibition of a significant effect of improving impact resistance is limited.

Furthermore, in order to obtain an impact modifier having a high ratio by weight of a flexible polymer phase and a satisfactory powder flowability, a technology in which a polymer serving as the innermost layer has a specific monomeric composition and the particle size of the impact modifier is specified in a specific range is disclosed (for example, refer to Patent Document 8). However, although the ratio by weight of the flexible polymer phase can be increased, this process includes the following problems: Since the composition of the flexible polymer phase is limited, a significant effect of improving impact resistance cannot be expected. Since the particle size of the impact modifier is limited, qualities other than impact resistance are inevitably degraded. For example, it is known that the increase in the particle size of graft polymers deteriorates physical properties represented by surface gloss of moldings. It is also known that a large particle size of an impact modifier in thermoplastic resins has an effect of increasing the degree of stress concentration but, at the same time, the increase in distance between particles decreases the degree of stress concentration. In particular, when the number of parts of the impact modifier mixed is small, the effect of increasing the distance between particles becomes more significant, resulting in an insufficient effect of improving impact resistance.

In other words, under the present situation, it is still desirable to develop a thermoplastic resin capable of highly satisfying conflicting properties including the improvement of impact resistance, the degradation of quality, and the increase in cost that are caused by adding an impact modifier.
Patent Document 1: Japanese Examined Patent Application Publication No. 39-19035
Patent Document 2: Japanese Examined Patent Application Publication No. 51-28117
Patent Document 3: Japanese Examined Patent Application Publication No. 42-22541
Patent Document 4: Japanese Unexamined Patent Application Publication No. 2-1763
Patent Document 5: Japanese Unexamined Patent Application Publication No. 8-100095
Patent Document 6: Japanese Unexamined Patent Application Publication No. 52-37987
Patent Document 7: Japanese Unexamined Patent Application Publication No. 8-217817
Patent Document 8: Korean Unexamined Patent Application Publication No. 2004-62761

### Disclosure of Invention

It is an object of the present invention to propose a novel thermoplastic resin composition in which high impact resistance can be exhibited without degrading weather resistance even when the content of an impact modifier is small.

In view of the above present situation, the present inventors have conducted intensive research in order to achieve a significantly high effect of improving impact resistance while maintaining qualities other than the impact resistance, and found the following: When an impact modifier containing a specific graft copolymer (b-1), a water-soluble polymer compound (b-2) having a physical gel-forming property, and a gelling agent (b-3) is blended in a thermoplastic resin composition, high impact resistance can be exhibited without degrading weather resistance even in the case where the content of the impact modifier is small. Consequently, the present invention has been accomplished.

The present invention relates to a thermoplastic resin composition including 100 parts by weight of a thermoplastic resin (a) and 0.5 to 20 parts by weight of an impact modifier (b) containing a graft copolymer (b-1) containing at least one (meth)acrylate flexible polymer phase having a glass transition temperature of lower than 20°C and a rigid polymer phase having a glass transition temperature of 20°C or higher serving as the outermost part of the graft copolymer, a water-soluble polymer compound (b-2) having a physical gel-forming property, and a gelling agent (b-3) wherein the gelling agent (b-3) is an inorganic salt and/or an acid. In the thermoplastic resin composition, the content of the water-soluble polymer compound (b-2) having the physical gel-forming property is 0.01 to 3.0 parts by weight relative to 100 parts by weight of the graft copolymer (b-1) and the content of the rigid polymer phase serving as the outermost part in the graft copolymer (b-1) is 0.5 to 10 percent by weight. In the present invention, unless otherwise stated, the term "(meth)acrylic" means acrylic and/or methacrylic.

A preferred embodiment relates to the above thermoplastic resin composition, wherein the graft copolymer (b-1) includes a (meth)acrylate flexible polymer phase serving as an inner layer and a rigid polymer phase serving as an outer layer.

A preferred embodiment relates to any one of the above thermoplastic resin compositions, wherein the graft copolymer (b-1) includes a rigid polymer phase serving as the innermost layer, a (meth)acrylate flexible polymer phase serving as an interlayer, and a rigid polymer phase serving as the outermost layer.

A preferred embodiment relates to any one of the above thermoplastic resin compositions, wherein the flexible polymer phase in the graft copolymer (b-1) is a flexible polymer phase prepared by polymerizing 50 to 100 percent by weight of a (meth)acrylic ester, 0 to 40 percent by weight of an aromatic vinyl monomer, 0 to 10 percent by weight of a vinyl monomer copolymerizable with the (meth)acrylic ester and the aromatic vinyl monomer, and 0.2 to 5 percent by weight of a multifunctional monomer, the flexible polymer phase having a volume-average particle size of 0.01 to 1.0 µm and a glass transition temperature of lower than 20°C.

A preferred embodiment relates to any one of the above thermoplastic resin compositions, wherein the flexible polymer phase in the graft copolymer (b-1) is a flexible polymer phase prepared by polymerizing 50 to 100 percent by weight of at least one alkyl (meth)acrylate selected from alkyl (meth)acrylates whose alkyl groups each have 1 to 22 carbon atoms, alkyl (meth)acrylates whose alkyl groups each have 1 to 22 carbon atoms and a hydroxyl group, and alkyl (meth)acrylates whose alkyl groups each have 1 to 22 carbon atoms and an alkoxyl group; 0 to 40 percent by weight of an aromatic vinyl monomer; 0 to 10 percent by weight of a vinyl monomer copolymerizable with the alkyl (meth)acrylate and the aromatic vinyl monomer; and 0.2 to 5 percent by weight of a multifunctional monomer, the flexible polymer phase having a volume-average particle size of 0.01 to 1.0 µm and a glass transition temperature of lower than 20°C.

A preferred embodiment relates to any one of the above thermoplastic resin compositions, wherein the flexible polymer phase in the graft copolymer (b-1) is a flexible polymer phase prepared by polymerizing 50 to 100 percent by weight of at least one alkyl (meth)acrylate selected from alkyl (meth)acrylates whose alkyl groups each have 1 to 12 carbon atoms, alkyl (meth)acrylates whose alkyl groups each have 1 to 12 carbon atoms and a hydroxyl group, and alkyl (meth)acrylates whose alkyl groups each have 1 to 12 carbon atoms and an alkoxyl group; 0 to 40 percent by weight of an aromatic vinyl monomer; 0 to 10 percent by weight of a vinyl monomer copolymerizable with the alkyl (meth)acrylate and the aromatic vinyl monomer; and 0.2 to 5 percent by weight of a multifunctional monomer, the flexible polymer phase having a volume-average particle size of 0.01 to 1.0 µm and a glass transition temperature of lower than 20°C.

A preferred embodiment relates to any one of the above thermoplastic resin compositions, wherein the rigid polymer phase serving as the outermost part in the graft copolymer (b-1) is a rigid polymer phase prepared by polymerizing a monomeric mixture containing 0 to 100 percent by weight of a (meth)acrylic ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylic ester, the aromatic vinyl monomer, and the vinyl cyanide monomer, the rigid polymer phase having a glass transition temperature of 20°C or higher.

A preferred embodiment relates to any one of the above thermoplastic resin compositions, wherein the content of the rigid polymer phase serving as the outermost part in the graft copolymer (b-1) is 0.5 to 7 percent by weight.

A preferred embodiment relates to any one of the above thermoplastic resin compositions, wherein the content of the rigid polymer phase serving as the outermost part in the graft copolymer (b-1) is 0.5 to 4 percent by weight.

A preferred embodiment relates to any one of the above thermoplastic resin compositions, wherein the impact modifier (b) further includes 0.05 to 3.0 parts by weight of an anti-blocking agent (b-4) relative to 100 parts by weight of the graft copolymer (b-1).

A preferred embodiment relates to any one of the above thermoplastic resin compositions, wherein the impact modifier (b) includes 0.05 to 1.8 parts by weight of the water-soluble polymer compound (b-2) having the physical gel-forming property relative to 100 parts by weight of the graft copolymer (b-1).

A preferred embodiment relates to any one of the above thermoplastic resin compositions, wherein the total content of the water-soluble polymer compound (b-2) having the physical gel-forming property and the anti-blocking agent (b-4) is 0.1 to 3.0 parts by weight relative to 100 parts by weight of the graft copolymer (b-1).

A preferred embodiment relates to any one of the above thermoplastic resin compositions, wherein the total content of the water-soluble polymer compound (b-2) having the physical gel-forming property and the anti-blocking agent (b-4) is 0.5 to 2.0 parts by weight relative to 100 parts by weight of the graft copolymer (b-1).

A preferred embodiment relates to any one of the above thermoplastic resin compositions, wherein the water-soluble polymer compound (b-2) having the physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

A preferred embodiment relates to any one of the above thermoplastic resin compositions, wherein the anti-blocking agent (b-4) is a polyvalent metal salt of an anionic surfactant.

A preferred embodiment relates to any one of the above thermoplastic resin compositions, wherein the anti-blocking agent (b-4) is composed of 10 to 100 percent by weight of a crosslinked polymer prepared by polymerizing 30 to 60 percent by weight of methyl methacrylate, 65 to 35 percent by weight of an aromatic vinyl monomer, 0.1 to 25 percent by weight of a crosslinkable monomer, and 0 to 30 percent by weight of another copolymerizable monomer and 0 to 90 percent by weight of a lubricant.

A preferred embodiment relates to any one of the above thermoplastic resin compositions, wherein the anti-blocking agent (b-4) is a silicone oil.

A preferred embodiment relates to the above thermoplastic resin composition, wherein the water-soluble polymer compound (b-2) having the physical gel-forming property is a water-soluble alginic acid derivative.

A preferred embodiment relates to any one of the above thermoplastic resin compositions, wherein the gelling agent (b-3) is an inorganic salt and/or an acid.

A preferred embodiment relates to any one of the above thermoplastic resin compositions, wherein the flexible polymer phase in the graft copolymer (b-1) has a volume-average particle size of 0.01 to 0.5 µm.

A preferred embodiment relates to any one of the above thermoplastic resin compositions, wherein the flexible polymer phase in the graft copolymer (b-1) has a volume-average particle size of 0.01 to 0.3 µm.

A preferred embodiment relates to any one of the above thermoplastic resin compositions, wherein the content of the impact modifier (b) is 0.5 to 10 parts by weight.

A preferred embodiment relates to any one of the above thermoplastic resin compositions, wherein the thermoplastic resin is a vinyl chloride resin.

The thermoplastic resin composition of the present invention can exhibit high impact resistance without degrading weather resistance even when the content of an impact modifier is small.

A graft copolymer (b-1) of the present invention contains at least one flexible polymer phase and at least one rigid polymer phase. For example, graft copolymers produced by emulsion polymerization, suspension polymerization, microsuspension polymerization, miniemulsion polymerization, or aqueous dispersion polymerization can be used. Among these, from the viewpoint that structures can be easily controlled, graft copolymers produced by emulsion polymerization or suspension polymerization can be preferably used.

In the present invention, the term "flexible" in the expression "flexible polymer phase" means that the glass transition temperature of the polymer is lower than 20°C. From the viewpoint described below, the glass transition temperature of the flexible polymer is preferably lower than 0°C and more preferably lower than -20°C. In the case where the glass transition temperature of the flexible polymer is 20°C or higher, the impact absorption ability of the flexible polymer component is decreased by blending the impact modifier of the present invention with a thermoplastic resin such as a vinyl chloride resin. Consequently, it tends to be difficult to achieve a significant effect of improving impact resistance.

On the other hand, in the present invention, the term "rigid" in the expression "rigid polymer phase" means that the glass transition temperature of the polymer is 20°C or higher. From the viewpoint described below, the glass transition temperature of the rigid polymer is preferably 30°C or higher and more preferably 50°C or higher. In the case where the glass transition temperature of the rigid polymer is lower than 20°C, the compatibility with a thermoplastic resin is decreased by blending the impact modifier of the present invention with the thermoplastic resin such as a vinyl chloride resin. Consequently, it may be difficult to achieve a significant effect of improving impact resistance and coarsening and agglomeration of the graft copolymer particles may easily occur.

The glass transition temperatures of polymers may be measured with a differential scanning calorimeter or the like. However, values calculated by the Fox equation using the values described in Polymer Handbook (J. Brandrup Interscience, 1989) are used in the present invention. (For example, the glass transition temperature of poly(methyl methacrylate) is 105°C and that of poly(butyl acrylate) is -54°C.)

The flexible polymer phase and the rigid polymer phase in the graft copolymer (b-1) of the present invention are not particularly limited as long as at least the outermost part includes a rigid polymer phase. Specific preferred examples include multilayer structured-graft copolymers such as a graft copolymer including a flexible polymer phase serving as an inner layer and a rigid polymer phase serving as an outer layer (the outermost part), and a graft copolymer including a rigid polymer phase serving as the innermost layer, a flexible polymer phase serving as an interlayer, and a rigid polymer phase serving as the outermost layer (the outermost part). These may be appropriately used alone or in combinations of two or more of the graft copolymers.

With respect to the above multilayer structured-graft copolymers, for example, graft copolymers having the former structure will be described. A layer structure in which the rigid polymer serving as the outer layer entirely covers the flexible polymer phase serving as the inner layer is generally used. However, depending on the ratio by weight or the like of the flexible polymer phase and the rigid polymer phase, the amount of rigid polymer for forming the layer structure may be insufficient. In such a case, the graft copolymer need not have a complete layer structure. A structure in which the rigid polymer phase serving as the outermost part covers a part of the flexible polymer phase and a structure in which the rigid polymer serving as the outermost part is graft-polymerized on a part of the flexible polymer phase are also preferably used. The same can be applied to graft copolymers having the latter structure.

The flexible polymer phase in the graft copolymer (b-1) is not particularly limited as long as the flexible polymer phase is composed of a (meth)acrylic flexible polymer. From the viewpoint of the quality represented by impact resistance of the resulting thermoplastic resin composition, a preferred example is a flexible polymer prepared by polymerizing 50 to 100 percent by weight of a (meth)acrylic ester, 0 to 40 percent by weight of an aromatic vinyl monomer, 0 to 10 percent by weight of a vinyl monomer copolymerizable with the (meth)acrylic ester and the aromatic vinyl monomer, and 0.2 to 5 percent by weight of a multifunctional monomer, the flexible polymer having a glass transition temperature of lower than 20°C. The volume-average particle size of the flexible polymer is preferably 0.01 to 1.0 µm, more preferably 0.01 to 0.5 µm, and particularly preferably 0.01 to 0.3 µm. When the volume-average particle size of the flexible polymer phase in the graft copolymer (b-1) exceeds 1.0 µm, it tends to be difficult to exhibit the effect of improving impact resistance and, in addition, the quality such as surface gloss of moldings molded using the thermoplastic resin composition may be degraded. On the other hand, when the volume-average particle size of the flexible polymer phase in the graft copolymer (b-1) is less than 0.01 µm, it tends to be difficult to exhibit the effect of improving impact resistance. The volume-average particle size may be measured with, for example, a MICROTRAC UPA150 (manufactured by NIKKISO Co., Ltd.).

Furthermore, it is known that the structure of the flexible polymer generally has a high effect of increasing the degree of stress concentration from the viewpoint that the impact resistance is highly improved.

The rigid polymer phase serving as the outermost part of the graft copolymer (b-1) is not particularly limited. From the viewpoint of dispersibility of the graft copolymer in thermoplastic resins, a preferred example thereof is a rigid polymer prepared by polymerizing a monomeric mixture containing 0 to 100 percent by weight of a (meth)acrylic ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylic ester, the aromatic vinyl monomer, and the vinyl cyanide monomer, the rigid polymer having a glass transition temperature of 20°C or higher.

For example, when the graft copolymer (b-1) includes a rigid polymer phase serving as the innermost layer, a flexible polymer phase serving as an interlayer, and a rigid polymer phase serving as the outermost layer, a preferred example of the rigid polymer phase (in this case, the innermost layer) other than that serving as the outermost part is a rigid polymer composed of 40 to 100 percent by weight of a methacrylic ester, 0 to 60 percent by weight of an acrylic ester, 0 to 60 percent by weight of an aromatic vinyl monomer, 0 to 10 percent by weight of a multifunctional monomer, and 0 to 20 percent by weight of a vinyl monomer copolymerizable with the methacrylic ester, the acrylic ester, and the aromatic vinyl monomer.

By mixing the above-described graft copolymer with thermoplastic resins, not only high impact resistance can be exhibited but also thermoplastic resins that do not degrade physical properties represented by weather resistance and surface gloss of moldings can be produced.

Typical processes for producing the above graft copolymers are described in detail in, for example, Japanese Unexamined Patent Application Publication Nos. 2002-363372, 2003-119396, and 9-286830.

The graft copolymer (b-1) usable in the present invention is not limited to the above polymers. For example, polymers prepared by copolymerization or graft polymerization of a monomeric composition mainly composed of at least one monomer selected from the following monomer group may be used alone or as a mixture for the flexible polymer and the rigid polymer.

Examples of monomers of the monomer group include (1) alkyl acrylates each having an alkyl group and alkyl acrylates each having a hydroxyl group or an alkoxyl group, for example, methyl acrylate, ethyl acrylate, butyl acrylate, 2-ethylhexyl acrylate, 4-hydroxybutyl acrylate, octyl acrylate, dodecyl acrylate, stearyl acrylate, and behenyl acrylate; (2) alkyl methacrylates each having an alkyl group and alkyl methacrylates each having a hydroxyl group or an alkoxyl group, for example, methyl methacrylate, ethyl methacrylate, butyl methacrylate, 2-ethylhexyl methacrylate, 2-hydroxyethyl methacrylate, dodecyl methacrylate, stearyl methacrylate, and behenyl methacrylate; (3) vinylarenes such as styrene, α-methylstyrene, monochlorostyrene, and dichlorostyrene; (4) vinylcarboxylic acids such as acrylic acid and methacrylic acid; (5) vinyl cyanides such as acrylonitrile and methacrylonitrile; (6) vinyl halides such as vinyl chloride, vinyl bromide, and chloroprene; (7) vinyl acetate; (8) alkenes such as ethylene, propylene, butylene, butadiene, and isobutylene; and (9) multifunctional monomers such as allyl methacrylate, diallyl phthalate, triallyl cyanurate, monoethylene glycol dimethacrylate, tetraethylene glycol dimethacrylate, divinylbenzene, and glycidyl methacrylate.

Among these, from the viewpoint that the impact resistance can be highly improved, the flexible polymer phase in the graft copolymer (b-1) is preferably composed of a polymer prepared by polymerizing 50 to 100 percent by weight of at least one alkyl (meth)acrylate selected from alkyl (meth)acrylates whose alkyl groups each have 1 to 22 carbon atoms, alkyl (meth)acrylates whose alkyl groups each have 1 to 22 carbon atoms and a hydroxyl group, and alkyl (meth)acrylates whose alkyl groups each have 1 to 22 carbon atoms and an alkoxyl group; 0 to 40 percent by weight of an aromatic vinyl monomer; 0 to 10 percent by weight of a vinyl monomer copolymerizable with the alkyl (meth)acrylate and the aromatic vinyl monomer; and 0.2 to 5 percent by weight of a multifunctional monomer.

The number of the carbons of the above alkyl (meth)acrylate is not particularly limited. However, for example, when the number of the carbons exceeds 22, polymerizability may be decreased, and thus alkyl (meth)acrylates each containing an alkyl group having up to 22 carbon atoms can be suitably used. More preferably, alkyl (meth)acrylates each containing an alkyl group having up to 12 carbon atoms, which are generally used for flexible polymer phases of (meth)acrylate impact modifiers, can be used. Specifically, a polymer prepared by polymerizing 50 to 100 percent by weight of at least one alkyl (meth)acrylate selected from alkyl (meth)acrylates whose alkyl groups each have 1 to 12 carbon atoms, alkyl (meth)acrylates whose alkyl groups each have 1 to 12 carbon atoms and a hydroxyl group, and alkyl (meth)acrylates whose alkyl groups each have 1 to 12 carbon atoms and an alkoxyl group; 0 to 40 percent by weight of an aromatic vinyl monomer; 0 to 10 percent by weight of a vinyl monomer copolymerizable with the alkyl (meth)acrylate and the aromatic vinyl monomer; and 0.2 to 5 percent by weight of a multifunctional monomer can be suitably used for the flexible polymer phase in the graft copolymer (b-1).

The amount of the multifunctional monomer (crosslinking agent and/or grafting agent) used for preparing the flexible polymer in the graft copolymer (b-1) of the present invention is preferably 0.2 to 5 percent by weight and more preferably 0.2 to 2 percent by weight relative to the flexible polymer in view of improving the impact resistance. When the amount of the multifunctional monomer used for preparing the flexible polymer in the graft copolymer (b-1) exceeds 5 percent by weight, the effect of improving impact resistance tends to be difficult to exhibit. On the other hand, when the amount of the multifunctional monomer used for preparing the flexible polymer in the graft copolymer (b-1) is less than 0.2 percent by weight, the impact modifier may not maintain its shape during molding, and thus the effect of improving impact resistance tends to be difficult to exhibit. However, when the flexible polymer phase has a multilayer structure, the amount of the multifunctional monomer used in a layer that is not in contact with the rigid polymer phase of the outermost part may be 0 percent by weight as long as the amount of the multifunctional monomer used in the entire flexible polymer phase is 0.2 to 5 percent by weight. the rigid polymer phase of the outermost part in the graft copolymer (b-1) is 0.5 to 10 percent by weight, preferably 0.5 to 7 percent by weight, and more preferably 0.5 to 4 percent by weight. When the ratio by weight of the rigid polymer phase of the outermost part in the graft copolymer (b-1) exceeds 10 percent by weight, the effect of improving impact resistance tends to decrease. On the other hand, in the case where the ratio by weight of the rigid polymer phase of the outermost part in the graft copolymer (b-1) is less than 0.5 percent by weight, for example, when the graft copolymer (b-1) is used as an impact modifier for thermoplastic resins such as vinyl chloride resins, the compatibility between the graft copolymer (b-1) and the thermoplastic resins is decreased. Consequently, the effect of improving impact resistance tends to be difficult to exhibit.

In the present invention, a water-soluble polymer compound (b-2) having a physical gel-forming property may be incorporated together with the graft copolymer (b-1). Herein, the term "physical gel" means a gel containing physical crosslinking formed by hydrogen bonds, ionic bonds, or the formation of chelates between polymer molecules. The phrase "having a physical gel-forming property" means that a change from a viscous fluid (sol) to an elastomer (gel) can be visually observed when a gelling agent such as an inorganic salt or acid is added to an aqueous solution containing only a water-soluble polymer compound. In the present invention, the term "water-soluble polymer compound (b-2) having a physical gel-forming property" is defined as a water-soluble polymer compound having the above property.

The water-soluble polymer compound having a physical gel-forming property usable in the present invention is not particularly limited as long as the above property can be exhibited. For example, a water-soluble polymer compound composed of a compound or a mixture containing two or more compounds selected from the following group can be used. Examples thereof include water-soluble alginic acid derivatives such as alginic acid, sodium alginate, potassium alginate, and ammonium alginate; hydroxyethylmethylcellulose; hydroxypropylmethylcellulose; carboxymethylcellulose; agar; gelatin; carrageenan; glucomannan; pectin; curdlan; gellan gum; and polyacrylic acid derivatives. In order to achieve the object of the present invention, among these, carboxymethylcellulose, water-soluble alginic acid derivatives, and polyacrylic acid derivatives are more preferable. Among these, water-soluble alginic acid derivatives are most preferably used.

The ratio between mannuronic acid and guluronic acid in the water-soluble alginic acid derivative is not particularly limited. However, a higher ratio of guluronic acid is preferable because the ability of forming a physical gel tends to increase. Therefore, the ratio of guluronic acid in the water-soluble alginic acid derivative is generally at least 5 percent by weight and more preferably at least 30 percent by weight. Also, the molecular weight of the water-soluble polymer compound represented by the above water-soluble alginic acid derivatives is not particularly limited. In view of the liquid transferring property during production, the viscosity of a 1.0 percent by weight aqueous solution measured with a B-type viscometer is preferably 2 to 22,000 mPa·s and more preferably 2 to 1,000 mPa·s.

The content of the water-soluble polymer compound (b-2) having the physical gel-forming property in the present invention is 0.01 to 3.0 parts by weight and preferably 0.05 to 1.8 parts by weight relative to 100 parts by weight of the graft copolymer (b-1). In the case where the content of the water-soluble polymer compound (b-2) having the physical gel-forming property is less than 0.01 parts by weight, coarsening and agglomeration tend to occur in isolation of the impact modifier. On the other hand, when the content of the water-soluble polymer compound (b-2) having the physical gel-forming property exceeds 3.0 parts by weight, the effect of suppressing coarsening and agglomeration in isolation of the impact modifier can be improved but a large amount of water-soluble polymer compound (including substances derived from the water-soluble polymer compound) remains in the impact modifier. Consequently, qualities such as the effect of imparting impact resistance and thermal stability during molding tend to degrade.

Examples of the gelling agent (b-3) usable in the present invention include inorganic salts such as sodium chloride, potassium chloride, lithium chloride, sodium bromide, potassium bromide, lithium bromide, potassium iodide, lithium iodide, potassium sulfate, ammonium sulfate, sodium sulfate, ammonium chloride, sodium nitrate, potassium nitrate, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; organic acids such as acetic acid and formic acid; and organic acid salts such as sodium acetate, calcium acetate, sodium formate, and calcium formate. These may be used alone or as a mixture. Among these, inorganic salts such as sodium chloride, potassium chloride, ammonium sulfate, sodium sulfate, ammonium chloride, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; and organic acids such as acetic acid and formic acid can be preferably used alone or in combinations of two or more of the gelling agents.

In the present invention, when a water-soluble alginic acid derivative is used as the water-soluble polymer compound (b-2) having the physical gel-forming property, calcium chloride, ferrous sulfate, ferrous chloride, ferric chloride, ferric sulfate, aluminum sulfate, or the like can be suitably used as the gelling agent (b-3).

The amount of the gelling agent (b-3) added in the present invention is not particularly limited. Preferably, most part of the gelling agent (b-3) can be washed away in a water washing process when the graft copolymer is isolated. Preferably, less than 1 part by weight and more preferably 0.01 to 0.5 parts by weight of the gelling agent (b-3) relative to 100 parts by weight of the graft copolymer (b-1) remains. In the case where the residual amount of the gelling agent (b-3) in the graft copolymer (b-1) exceeds 1 part by weight, for example, when the composition is blended with a vinyl chloride resin, the processability during molding may be changed. In this case, a high impact resistance effect tends to be difficult to exhibit and, in addition, a problem such as the yellowing of moldings may occur.

The amount of the gelling agent (b-3) used in the isolation of the graft copolymer is not particularly limited as long as the residual amount of the gelling agent (b-3) is less than 1 part by weight relative to 100 parts by weight of the graft copolymer (b-1). In view of ease of the isolation and the production cost, the amount of the gelling agent (b-3) used is preferably 0.2 to 20 parts by weight and more preferably 1 to 10 parts by weight relative to the graft copolymer (b-1).

In the present invention, the purposes of incorporating the water-soluble polymer compound (b-2) having the physical gel-forming property and the gelling agent (b-3) therefor in an impact modifier (b) are as follows: (1) A non-sticky physical gel coexists in coagulated particles of the graft copolymer, thereby improving the blocking resistance of the coagulated particles in the course of isolation and the shape retention of coagulated particles (impartation of elasticity to coagulated particles). (2) A dry product of a non-sticky physical gel coexists in coagulated particles, thereby improving the blocking resistance of the coagulated particles and the shape retention of the coagulated particles (impartation of elasticity to the coagulated particles) even after the coagulated particles are dried. Thus, coarsening and agglomeration can be suppressed.

Japanese Unexamined Patent Application Publication No. 52-37987 discloses a process performed under regulated conditions as a process for granulating a rubbery polymer latex that is extremely difficult to isolate in a particle form. In the process, a high-molecular-weight polyanion having a carboxyl group and/or a hydroxyl group in its molecule is added to a rubber latex and the mixed latex is added dropwise to an aqueous solution containing at least one alkaline earth metal. However, according to the description of this process, at least 2.0 parts by weight and preferably at least 4.0 parts by weight of the high-molecular-weight polyanion must be added relative to 100 parts by weight of the polymeric solid content in the rubber latex. In other words, in this process, at least 4.0 parts by weight of the high-molecular-weight polyanion must be added in order to suppress the coarsening and the agglomeration of the isolated polymeric coagulated particles.

In general, it can be easily supposed that when no less than 4.0 parts by weight of a foreign matter (i.e., in this case, the high-molecular-weight polyanion) is incorporated in a polymer, various types of qualities such as impact resistance strength and thermal stability of the original rubber polymer are impaired. As a result, it is difficult to achieve the object of the present invention, that is, to highly satisfy the quality (for example, the effect of improving impact resistance).

In the present invention, by using the graft copolymer (b-1) including at least one flexible polymer phase and at least one rigid polymer phase, wherein the outermost part of the graft copolymer (b-1) includes the rigid polymer phase, the content of the water-soluble polymer compound (b-2) having the physical gel-forming property, which is a foreign matter, can be set to 0.01 to 3.0 parts by weight and preferably 0.05 to 1.8 parts by weight. As a result, an impact modifier with suppressed coarsening and agglomeration can be obtained, and thus it becomes possible to exhibit qualities such as the significant effect of improving impact resistance and thermal stability.

According to the present invention, in the impact modifier containing a water-soluble polymer compound having a physical gel-forming property, a graft copolymer, and a gelling agent, 0.05 to 3.0 parts by weight, preferably 0.1 to 3.0 parts by weight, and more preferably 0.2 to 2.5 parts by weight of an anti-blocking agent (b-4) may be further added relative to 100 parts by weight of the graft copolymer (b-1). Thereby, it becomes possible to achieve the object of the present invention, i.e., to improve impact resistance and satisfy the balance with the other qualities at a higher level using an impact modifier with suppressed coarsening and agglomeration.

The suitable amount of the anti-blocking agent (b-4) added is affected by the contents of the graft copolymer (b-1) and the water-soluble polymer compound (b-2) having the physical gel-forming property in the impact modifier (b). The total content (adding amount) of the water-soluble polymer compound (b-2) having the physical gel-forming property and the anti-blocking agent (b-4) in the impact modifier (b) is preferably 0.06 to 6.0 parts by weight, more preferably 0.1 to 3.0 parts by weight, and particularly preferably 0.5 to 2.0 parts by weight relative to 100 parts by weight of the graft copolymer (b-1).

When the total content (adding amount) of the water-soluble polymer compound (b-2) having the physical gel-forming property and the anti-blocking agent (b-4) in the impact modifier (b) is less than 0.06 parts by weight, the isolated impact modifier (b) may be easily coarsened or agglomerated. When the total content (adding amount) exceeds 6.0 parts by weight, the quality such as the effect of improving impact resistance tends to decrease.

In the present invention, both the water-soluble polymer compound (b-2) having the physical gel-forming property and the anti-blocking agent (b-4) are simultaneously contained (combined). Thereby, the content of a foreign matter in the isolated impact modifier (b) can also be set to 2.0 parts by weight or less in an ordinary case. Consequently, it becomes possible to satisfy the quality such as the effect of improving impact resistance, which is inherently possessed by the graft copolymer, and the effect of suppressing coarsening and agglomeration at a higher level.

The anti-blocking agent (b-4) usable in the present invention is not particularly limited. From the viewpoint that the quality such as the effect of improving impact resistance, and the effect of suppressing coarsening and agglomeration can be satisfied at a higher level, for example, a polyvalent metal salt of an anionic surfactant, a crosslinked polymer, and/or a silicone oil can be suitably used. When a crosslinked polymer is used, the crosslinked polymer may be used together with a lubricant, which is an optional component. Ten to 100 percent by weight of the crosslinked polymer and 0 to 90 percent by weight of the lubricant and preferably 50 to 100 percent by weight of the crosslinked polymer and 0 to 50 percent by weight of the lubricant may be used.

Examples of the polyvalent metal salt of the anionic surfactant that can be used for the above purpose include polyvalent metal salts of an anionic surfactant such as fatty acid salts, sulfuric esters of higher alcohols, sulfuric ester salts of liquid fatty oil, sulfates of aliphatic amines or aliphatic amides, phosphoric esters of aliphatic alcohols, sulfonates of dibasic fatty acid esters, sulfonates of aliphatic amides, alkylallyl sulfonates, and formalin condensates of naphthalene sulfonates. Among these, fatty acid salts, sulfuric esters of higher alcohols, and sulfonates of dibasic fatty acid esters can be suitably used from the viewpoint that the quality such as the effect of improving impact resistance, and the effect of suppressing coarsening and agglomeration can be highly satisfied. However, the polyvalent metal salts of anionic surfactants are not limited thereto.

The crosslinked polymer that can be used for the above purpose is not particularly limited. A crosslinked polymer prepared by polymerizing 30 to 60 percent by weight of methyl methacrylate, 65 to 35 percent by weight of an aromatic vinyl monomer, 0.1 to 25 percent by weight of a crosslinkable monomer, and 0 to 30 percent by weight of another copolymerizable monomer can be suitably used from the viewpoint that the quality such as the effect of improving impact resistance, and the effect of suppressing coarsening and agglomeration can be highly satisfied. However, the crosslinked polymer is not limited thereto.

Examples of the aromatic vinyl monomer include styrene and α-methylstyrene. Examples of the crosslinkable monomer include compounds each having two or more functional groups per molecule such as divinylbenzene, 1,3-butylene glycol dimethacrylate, trimethylolpropane tri(meth)acrylate, allyl (meth)acrylate, ethylene glycol di(meth)acrylate, 1,4-butanediol di(meth)acrylate, 1,6-hexanediol (meth)acrylate, diallyl maleate, diallyl itaconate, allyl (meth)acrylate, triallyl cyanurate, triallyl isocyanurate, diallyl phthalate, and triallyl trimesate. Examples of the other copolymerizable monomer include vinyl cyanides such as acrylonitrile and methacrylonitrile, acrylic acid, methacrylic acid, alkyl esters of acrylic acid, and alkyl esters of methacrylic acid.

The lubricant is not particularly limited. Examples of the lubricant include fatty acids such as stearic acid, 12-hydroxystearic acid, and behenic acid; fatty acid metal salts such as zinc stearate and calcium stearate; fatty acid amides such as oleic amide, ethylenebisamide, and erucic amide; butyl stearate; stearyl stearate; sorbitan stearate such as sorbitan monostearate; pentaerythritol stearate such as pentaerythritol tetrastearate; glycerol esters of fatty acids such as glycerol monobehenate, glycerol mono 12-hydroxystearate, glycerol monostearate, and glycerol monolaurate; fatty acid esters such as hardened castor oil; and higher alcohols such as stearyl alcohol. Among these, glycerol monobehenate, glycerol mono 12-hydroxystearate, pentaerythritol tetrastearate, hardened castor oil, 12-hydroxystearic acid, ethylenebisamide, oleic amide, glycerol monostearate, or glycerol monolaurate can be suitably used.

The silicone oil that can be used for the above purpose is not particularly limited. An organosiloxane or polyorganosiloxane that has a siloxane bond can be suitably used from the viewpoint that the quality such as the effect of improving impact resistance, and the effect of suppressing coarsening and agglomeration can be highly satisfied. However, the silicone oil is not limited thereto.

The volume-average particle size of coagulated particles of the graft copolymer, i.e., the impact modifier of the present invention, is not particularly limited as long as the particles are not coarsened or agglomerated.
The volume-average particle size may be arbitrarily controlled according to the supply form of dry particulate product. For example, in the case used for vinyl chloride resins, in general, the volume-average particle size measured with a MICROTRAC FRA-SVRSC (manufactured by NIKKISO Co., Ltd.) is preferably 50 µm to 1.0 mm and more preferably 75 µm to 750 µm.

In the thermoplastic resin composition of the present invention, for example, vinyl chloride resins, (meth)acrylic resins, styrene resins, carbonate resins, amide resins, ester resins, and olefin resins can be suitably used as the thermoplastic resin. However, the thermoplastic resin is not limited thereto.

An excellent effect can be exhibited, in particular, when the thermoplastic resin composition of the present invention is used as an impact modifier for vinyl chloride resins. Therefore, among the above resins, vinyl chloride resins are preferable. In the present invention, the term "vinyl chloride resins" means a vinyl chloride homopolymer or a copolymer containing at least 70 percent by weight of a unit derived from vinyl chloride.

Since the thermoplastic resin composition of the present invention contains the impact modifier (b) capable of exhibiting excellent impact resistance even in a small amount of addition, the balance between excellent physical properties and the cost, which has been hitherto difficult to achieve, can be accomplished. The content of the impact modifier (b) in the thermoplastic resin composition is not particularly limited. In view of the quality and the cost, the content is preferably 0.5 to 20 parts by weight, more preferably 0.5 to 10 parts by weight, particularly preferably 1 to 6.5 parts by weight, and most preferably 1.5 to 5.5 parts by weight. When the content of the impact modifier in the thermoplastic resin composition exceeds 20 parts by weight, the effect of improving impact resistance is sufficient but qualities other than the impact resistance may be degraded and the cost may increase. On the other hand, when the content of the impact modifier (b) in the thermoplastic resin composition is less than 0.5 parts by weight, the satisfactory effect of improving impact resistance may be difficult to achieve.

According to need, additives such as an antioxidant, a heat stabilizer, an ultraviolet absorber, a pigment, an antistatic agent, a lubricant, and a processing aid may be appropriately added to the thermoplastic resin composition of the present invention.

### EXAMPLES

The present invention will now be described in further detail on the basis of examples.

### (EXAMPLE 1)

### (Preparation of graft copolymer A)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of butyl acrylate (hereinafter also referred to as BA) (8.96 parts by weight), allyl methacrylate (hereinafter also referred to as AMA) (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (87.56 parts by weight), AMA (0.44 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer having a glass transition temperature (hereinafter also referred to as Tg) of -54°C and a volume-average particle size of 0.16 µm measured with a MICROTRAC UPA150 (manufactured by NIKKISO Co., Ltd.). A mixture containing methyl methacrylate (hereinafter also referred to as MMA) (3.0 parts by weight) serving as a rigid polymer component and cumene hydroperoxide (0.01 parts by weight) was continuously added to the acrylate flexible polymer at 50°C over a period of 10 minutes. After the completion of the addition, cumene hydroperoxide (0.01 parts by weight) was added and stirring was continued for 1 hour to complete polymerization. The polymerization conversion of the monomer components was 98.3%. Thus, a latex of graft copolymer A having a content of flexible polymer of 97 percent by weight and a content of rigid polymer (Tg: 105°C) serving as the outermost part of 3 percent by weight was prepared.

### (Preparation of impact modifier G-1)

An aqueous solution of sodium alginate (ALGITEX LL, manufactured by Kimica Corporation) (having an aqueous solution viscosity of 120 mPa·s measured with a B-type viscometer) with a concentration of 1.5 percent by weight was added to the latex of graft copolymer A (polymeric solid content: 100 parts by weight) so that the solid content of sodium alginate was 0.4 parts by weight relative to 100 parts by weight of the graft copolymer A. The mixture was stirred for 3 minutes to prepare a mixed latex. The mixed latex at 5°C was sprayed into droplets so as to have a volume-average droplet size of about 200 µm in a cylindrical apparatus having a diameter of 60 cm with a spiral flow-type cone nozzle, which is one of pressure nozzles. A nozzle diameter of 0.6 mm was used and the spraying pressure was 3.7 kg/cm². The spray was performed from a height of 5 m from the liquid level at the bottom of the tower. At the same time, an aqueous solution of calcium chloride with a concentration of 30 percent by weight was sprayed into droplets each having a droplet size of 0.1 to 10 µm using a two-fluid nozzle while the aqueous solution was mixed with air so that the solid content of calcium chloride was 5 to 15 parts by weight relative to 100 parts by weight of the graft copolymer A. The droplets of the mixed latex dropped into the tower were fed in a receiving tank at the bottom of the tower, the tank containing an aqueous solution of calcium chloride at 5°C with a concentration of 1.0 percent by weight, and were then isolated.

An aqueous solution of potassium palmitate with a concentration of 5 percent by weight was added to the resulting aqueous solution of coagulated latex particles so that the solid content of potassium palmitate was 1.5 parts by weight relative to 100 parts by weight of the solid content of the graft copolymer A. Heat treatment was performed and the mixture was then dehydrated and dried to prepare a white resin powder.

### (Preparation of thermoplastic resin composition, preparation of molding, and evaluation thereof)

A vinyl chloride resin (100 parts by weight) (Kanevinyl S-1001 manufactured by Kaneka Corporation, average degree of polymerization: 1,000), a lead-based one-pack stabilizer (4.5 parts by weight) (LGC3203 manufactured by ACROS), titanium oxide (4.5 parts by weight), calcium carbonate (8 parts by weight), a processing aid of methyl methacrylate polymer (0.5 parts by weight) (Kane Ace PA-20 manufactured by Kaneka Corporation) (methyl methacrylate polymer prepared in such a manner that the specific viscosity of a solution at 30°C is less than 0.5 when 0.1 g of the polymer is dissolved in 100 mL of chloroform), and the impact modifier (G-1) (6 parts by weight) were blended with a Henschel mixer to prepare a powder compound.

The resulting powder compound was extruded at 180°C with a small conical twin-screw extruder connected to a Polylab (manufactured by HAAKE) to produce a sheet having a width of 7 cm and a thickness of 3 mm. A test piece for impact resistance was prepared using the resulting extruded sheet. The Charpy impact strength was measured in accordance with Japanese Industrial Standard (JIS) K-7111.
Table 3 shows the result.

### (EXAMPLE 2)

### (Preparation of graft copolymer B)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (80.60 parts by weight), AMA (0.40 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer having a Tg of -54°C and a volume-average particle size of 0.15 µm. A mixture containing MMA (10.0 parts by weight) serving as a rigid polymer component and cumene hydroperoxide (0.03 parts by weight) was continuously added to the acrylate flexible polymer at 50°C over a period of 30 minutes. After the completion of the addition, cumene hydroperoxide (0.01 parts by weight) was added and stirring was continued for 1 hour to complete polymerization. The polymerization conversion of the monomer components was 99.0%. Thus, a latex of graft copolymer B having a content of flexible polymer of 90 percent by weight and a content of rigid polymer (Tg: 105°C) serving as the outermost part of 10 percent by weight was prepared.

### (Preparation of impact modifier G-2)

The process was performed as in Example 1 except that the latex of graft copolymer B was used and droplets of mixed latex were fed in a receiving tank containing an aqueous solution of calcium chloride at 20°C with a concentration of 1.0 percent by weight, the tank being disposed at the bottom of the tower.

A molding was obtained and the Charpy impact strength of the molding was measured by the same process as that in Example 1 except that this impact modifier G-2 was used.
Table 3 shows the result.

### (EXAMPLE 3)

### (Preparation of graft copolymer C)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (85.57 parts by weight), AMA (0.43 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer having a Tg of -54°C and a volume-average particle size of 0.15 µm. A mixture containing MMA (5.0 parts by weight) serving as a rigid polymer component and cumene hydroperoxide (0.03 parts by weight) was continuously added to the acrylate flexible polymer at 50°C over a period of 30 minutes. After the completion of the addition, cumene hydroperoxide (0.01 parts by weight) was added and stirring was continued for 1 hour to complete polymerization. The polymerization conversion of the monomer components was 99.2%. Thus, a latex of graft copolymer C having a content of flexible polymer of 95 percent by weight and a content of rigid polymer (Tg: 105°C) serving as the outermost part of 5 percent by weight was prepared.

### (Preparation of impact modifier G-3)

The process was performed as in Example 1 except that the latex of graft copolymer C was used and droplets of mixed latex were fed in a receiving tank containing an aqueous solution of calcium chloride at 20°C with a concentration of 1.0 percent by weight, the tank being disposed at the bottom of the tower.

A molding was obtained and the Charpy impact strength of the molding was measured by the same process as that in Example 1 except that this impact modifier G-3 was used.
Table 3 shows the result.

### (EXAMPLE 4)

### (Preparation of graft copolymer D)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (90.05 parts by weight), AMA (0.45 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer having a Tg of -54°C and a volume-average particle size of 0.17 µm. A mixture containing MMA (0.5 parts by weight) serving as a rigid polymer component and cumene hydroperoxide (0.003 parts by weight) was continuously added to the acrylate flexible polymer at 50°C over a period of 5 minutes. After the completion of the addition, cumene hydroperoxide (0.01 parts by weight) was added and stirring was continued for 1 hour to complete polymerization. The polymerization conversion of the monomer components was 99.6%. Thus, a latex of graft copolymer D having a content of flexible polymer of 99.5 percent by weight and a content of rigid polymer (Tg: 105°C) serving as the outermost part of 0.5 percent by weight was prepared.

### (Preparation of impact modifier G-4)

The process was performed as in Example 1 except that the latex of graft copolymer D was used and droplets of mixed latex were fed in a receiving tank containing an aqueous solution of calcium chloride at 1°C with a concentration of 1.0 percent by weight, the tank being disposed at the bottom of the tower.

A molding was obtained and the Charpy impact strength of the molding was measured by the same process as that in Example 1 except that this impact modifier G-4 was used.
Table 3 shows the result.

### (EXAMPLE 5)

### (Preparation of graft copolymer E)

Deionized water (160 parts by weight) and sodium lauryl sulfate (0.0035 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (85.57 parts by weight), AMA (0.43 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer having a Tg of -54°C and a volume-average particle size of 0.49 µm. A mixture containing MMA (5.0 parts by weight) serving as a rigid polymer component and cumene hydroperoxide (0.03 parts by weight) was continuously added to the acrylate flexible polymer at 50°C over a period of 30 minutes. After the completion of the addition, cumene hydroperoxide (0.01 parts by weight) was added and stirring was continued for 1 hour to complete polymerization. The polymerization conversion of the monomer components was 98.5%. Thus, a latex of graft copolymer E having a content of flexible polymer of 95 percent by weight and a content of rigid polymer (Tg: 105°C) serving as the outermost part of 5 percent by weight was prepared.

### (Preparation of impact modifier G-5)

The process was performed as in Example 1 except that the latex of graft copolymer E was used and droplets of mixed latex were fed in a receiving tank containing an aqueous solution of calcium chloride at 20°C with a concentration of 1.0 percent by weight, the tank being disposed at the bottom of the tower.

A molding was obtained and the impact resistance thereof was measured by the same process as that in Example 1 except that this impact modifier G-5 was used. Table 3 shows the result.

### (EXAMPLE 6)

### (Preparation of graft copolymer F)

Deionized water (160 parts by weight), sodium dodecylbenzenesulfonate (0.3 parts by weight), and sodium nitrite (0.1 parts by weight) were fed in a glass reactor equipped with a thermometer, a stirrer, a reflux condenser, an inlet for a nitrogen gas, and a unit for adding a monomer and an emulsifier. An emulsion containing BA (93.53 parts by weight), stearyl methacrylate (hereinafter also referred to as SMA) (1.00 part by weight), AMA (0.47 parts by weight), benzoyl peroxide (0.5 parts by weight), sodium dodecylbenzenesulfonate (0.3 parts by weight), and deionized water (100 parts by weight) was fed therein with stirring in a nitrogen flow. The mixture was heated to 60°C and was stirred for 1 hour to prepare an acrylate flexible polymer having a Tg of -55°C and a volume-average particle size of 0.85 µm. A mixed solution prepared by dissolving disodium ethylenediaminetetraacetate (0.01 parts by weight) and ferrous sulfate heptahydrate (0.005 parts by weight) in distilled water (5 parts by weight); sodium formaldehyde sulfoxylate (0.2 parts by weight); and sodium dodecylbenzenesulfonate (0.1 parts by weight) were fed to the acrylate flexible polymer. A mixture containing MMA (5.0 parts by weight) serving as a rigid polymer component and cumene hydroperoxide (0.03 parts by weight) was continuously added at 60°C over a period of 10 minutes. After the completion of the addition, cumene hydroperoxide (0.01 parts by weight) was added and stirring was continued for 1 hour to complete polymerization. The polymerization conversion of the monomer components was 99.0%. Thus, a latex of graft copolymer F having a content of flexible polymer of 95 percent by weight and a content of rigid polymer (Tg: 105°C) serving as the outermost part of 5 percent by weight was prepared.

### (Preparation of impact modifier G-6)

The process was performed as in Example 1 except that the latex of graft copolymer F was used and droplets of mixed latex were fed in a receiving tank containing an aqueous solution of calcium chloride at 20°C with a concentration of 1.0 percent by weight, the tank being disposed at the bottom of the tower.

A molding was obtained and the Charpy impact strength of the molding was measured by the same process as that in Example 1 except that this impact modifier G-6 was used.
Table 3 shows the result.

### (EXAMPLE 7)

### (Preparation of graft copolymer G)

Deionized water (160 parts by weight) and sodium lauryl sulfate (0.06 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of MMA (9 parts by weight) and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (87.56 parts by weight), AMA (0.44 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer including a rigid polymer (Tg: 105°C) therein, the acrylate flexible polymer having a Tg of -54°C and a volume-average particle size of 0.18 µm. A mixture containing MMA (3.0 parts by weight) serving as a rigid polymer component and cumene hydroperoxide (0.01 parts by weight) was continuously added to the acrylate flexible polymer at 50°C over a period of 10 minutes. After the completion of the addition, cumene hydroperoxide (0.01 parts by weight) was added and stirring was continued for 1 hour to complete polymerization. The polymerization conversion of the monomer components was 98.0%. Thus, a latex of graft copolymer G having a content of flexible polymer of 97 percent by weight, the flexible polymer including the innermost rigid polymer (Tg: 105°C), and a content of rigid polymer (Tg: 105°C) serving as the outermost part of 3 percent by weight, was prepared.

An impact modifier (G-7) was prepared, a molding was obtained, and the Charpy impact strength of the molding was measured by the same process as that in Example 1 except that this graft copolymer G was used. Table 3 shows the result.

### (EXAMPLE 8)

### (Preparation of graft copolymer H)

Deionized water (128 parts by weight), ethanol (32 parts by weight), and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of SMA (0.90 parts by weight), BA (8.06 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing SMA (8.76 parts by weight), BA (78.81 parts by weight), AMA (0.44 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer having a Tg of -60°C and a volume-average particle size of 0.20 µm. A mixture containing MMA (3.0 parts by weight) serving as a rigid polymer component and cumene hydroperoxide (0.01 parts by weight) was continuously added to the acrylate flexible polymer at 50°C over a period of 10 minutes. After the completion of the addition, cumene hydroperoxide (0.01 parts by weight) was added and stirring was continued for 1 hour to complete polymerization. The polymerization conversion of the monomer components was 98.0%. Thus, a latex of graft copolymer H having a content of flexible polymer of 97 percent by weight and a content of rigid polymer (Tg: 105°C) serving as the outermost part of 3 percent by weight was prepared.

### (Preparation of impact modifier G-8)

The process was performed as in Example 1 except that the latex of graft copolymer H was used and droplets of mixed latex were fed in a receiving tank containing an aqueous solution of calcium chloride at 1°C with a concentration of 1.0 percent by weight, the tank being disposed at the bottom of the tower.

A molding was obtained and the Charpy impact strength of the molding was measured by the same process as that in Example 1 except that this impact modifier G-8 was used.
Table 3 shows the result.

### (EXAMPLE 9)

### (Preparation of graft copolymer I)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of 2-ethylhexyl acrylate (hereinafter also referred to as 2-EHA) (1.34 parts by weight), BA (7.62 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing 2-EHA (13.13 parts by weight), BA (74.43 parts by weight), AMA (0.44 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours to prepare an acrylate flexible polymer having a Tg of -53°C and a volume-average particle size of 0.17 µm. A mixture containing MMA (3.0 parts by weight) serving as a rigid polymer component and cumene hydroperoxide (0.01 parts by weight) was continuously added to the acrylate flexible polymer at 50°C over a period of 10 minutes. After the completion of the addition, cumene hydroperoxide (0.01 parts by weight) was added and stirring was continued for 1 hour to complete polymerization. The polymerization conversion of the monomer components was 98.7%. Thus, a latex of graft copolymer I having a content of flexible polymer of 97 percent by weight and a content of rigid polymer (Tg: 105°C) serving as the outermost part of 3 percent by weight was prepared.

An impact modifier (G-9) was prepared, a molding was obtained, and the Charpy impact strength of the molding was measured by the same process as that in Example 1 except that this graft copolymer I was used. Table 3 shows the result.

### (EXAMPLE 10)

### (Preparation of graft copolymer J)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of 2-EHA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred, for 1 hour, a monomeric mixture containing 2-EHA (5.52 parts by weight), AMA (0.03 parts by weight), and cumene hydroperoxide (0.01 parts by weight) was added dropwise to the mixture over a period of 30 minutes. After the resulting mixture was stirred for 1 hour, a monomeric mixture containing BA (82.04 parts by weight), AMA (0.41 parts by weight), and cumene hydroperoxide (0.1 parts by weight) was added dropwise to the mixture over a period of 4.5 hours. Furthermore, during the addition of the monomeric mixture, a 5 percent by weight aqueous solution containing 1 part by weight of sodium lauryl sulfate was continuously added over a period of 4.5 hours. After the monomeric mixture was added, stirring was continued for 1.5 hours to prepare a two-layer acrylate flexible polymer including a layer having a Tg of -50°C and another layer having a Tg of -54°C, the acrylate flexible polymer having a volume-average particle size of 0.15 µm. A mixture containing MMA (3.0 parts by weight) serving as a rigid polymer component and cumene hydroperoxide (0.01 parts by weight) was continuously added to the acrylate flexible polymer at 50°C over a period of 10 minutes. After the completion of the addition, cumene hydroperoxide (0.01 parts by weight) was added and stirring was continued for 1 hour to complete polymerization. The polymerization conversion of the monomer components was 99.2%. Thus, a latex of graft copolymer J having a content of flexible polymer of 97 percent by weight and a content of rigid polymer (Tg: 105°C) serving as the outermost part of 3 percent by weight was prepared.

An impact modifier (G-10) was prepared, a molding was obtained, and the Charpy impact strength of the molding was measured by the same process as that in Example 1 except that this graft copolymer J was used. Table 3 shows the result.

### (EXAMPLE 11)

### (Preparation of graft copolymer K)

Deionized water (160 parts by weight) and sodium lauryl sulfate (0.3 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of 2-EHA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, sodium sulfate (0.1 parts by weight) was fed to the mixture. The resulting mixture was stirred for 15 minutes and a monomeric mixture containing 2-EHA (5.52 parts by weight), AMA (0.03 parts by weight), and cumene hydroperoxide (0.01 parts by weight) was then added dropwise to the mixture over a period of 30 minutes to perform polymerization while polymer particles were enlarged. After the resulting mixture was stirred for 1 hour, a monomeric mixture containing BA (82.04 parts by weight), AMA (0.41 parts by weight), and cumene hydroperoxide (0.1 parts by weight) was added dropwise to the mixture over a period of 4.5 hours. Furthermore, during the addition of the monomeric mixture, a 5 percent by weight aqueous solution containing 1 part by weight of sodium lauryl sulfate was continuously added over a period of 4.5 hours. After the monomeric mixture was added, stirring was continued for 1.5 hours to prepare an enlarged two-layer acrylate flexible polymer including a layer having a Tg of -50°C and another layer having a Tg of -54°C, the acrylate flexible polymer having a volume-average particle size of 0.21 µm. A mixture containing MMA (3.0 parts by weight) serving as a rigid polymer component and cumene hydroperoxide (0.01 parts by weight) was continuously added to the acrylate flexible polymer at 50°C over a period of 10 minutes. After the completion of the addition, cumene hydroperoxide (0.01 parts by weight) was added and stirring was continued for 1 hour to complete polymerization. The polymerization conversion of the monomer components was 98.0%. Thus, a latex of graft copolymer K having a content of flexible polymer of 97 percent by weight and a content of rigid polymer (Tg: 105°C) serving as the outermost part of 3 percent by weight was prepared.

An impact modifier (G-11) was prepared, a molding was obtained, and the Charpy impact strength of the molding was measured by the same process as that in Example 1 except that this graft copolymer K was used. Table 3 shows the result.

### (EXAMPLE 12)

An impact modifier (G-12) was prepared, a molding was obtained, and the Charpy impact strength of the molding was measured by the same process as that in Example 1 except that the amount of sodium alginate added was 0.01 parts by weight. Table 4 shows the result.

### (EXAMPLE 13)

The amount of sodium alginate added was 0.7 parts by weight and the amount of potassium palmitate added was adjusted. A molding was obtained and the Charpy impact strength of the molding was measured. Table 4 shows the result.

### (EXAMPLE 14)

An impact modifier (G-14) was prepared, a molding was obtained, and the Charpy impact strength of the molding was measured by the same process as that in Example 1 except that the amount of sodium alginate added was 1.8 parts by weight and the amount of potassium palmitate added was 0.1 parts by weight. Table 4 shows the result.

### (EXAMPLE 15)

An impact modifier (G-15) was prepared, a molding was obtained, and the Charpy impact strength of the molding was measured by the same process as that in Example 1 except the following: In place of the aqueous solution of sodium alginate with a concentration of 1.5 percent by weight, an aqueous solution of hydroxypropylmethylcellulose (60SH-4000, manufactured by Shin-Etsu Chemical Co., Ltd.) (having an aqueous solution viscosity of 4,000 mPa·s measured with a B-type viscometer) with a concentration of 2.0 percent by weight was added so that the solid content of hydroxypropylmethylcellulose was 0.4 parts by weight relative to 100 parts by weight of the solid content of the graft copolymer A. Table 4 shows the result.

### (EXAMPLE 16)

### (Preparation of crosslinked polymer)

Deionized water (200 parts by weight), sodium oleate (0.5 parts by weight), ferrous sulfate (0.002 parts by weight), disodium ethylenediaminetetraacetate (0.005 parts by weight), and sodium formaldehyde sulfoxylate (0.2 parts by weight) were fed in a polymerization container equipped with a stirrer and the mixture was heated to 60°C. Subsequently, a mixed solution containing methyl methacrylate (55 percent by weight), styrene (40 percent by weight), 1,3-butyleneglycol dimethacrylate (5 percent by weight) (total 100 parts by weight of monomers), and cumene hydroperoxide (0.3 parts by weight) was continuously added over a period of 7 hours. During the addition, sodium oleate (0.5 parts by weight each) was added after 2, 4, and 6 hours from the start of the addition of the mixed solution. After the completion of the addition of the monomeric mixed solution, postpolymerization was performed for 2 hours.
Thus, a crosslinked polymer latex with a polymerization conversion of 99% and a polymeric solid content of 33 percent by weight was prepared.

An impact modifier (G-16) was prepared, a molding was obtained, and the Charpy impact strength of the molding was measured by the same process as that in Example 1 except that, in place of 1.5 parts by weight of potassium palmitate, the crosslinked polymer was added so that the solid content of the crosslinked polymer was 1.0 part by weight relative to 100 parts by weight of the solid content of the graft copolymer A. Table 4 shows the result.

### (EXAMPLE 17)

An impact modifier (G-17) was prepared, a molding was obtained, and the Charpy impact strength of the molding was measured by the same process as that in Example 1 except that, in place of 1.5 parts by weight of potassium palmitate, 0.3 parts by weight of a silicone oil (SH200-350CS manufactured by Shin-Etsu Chemical Co., Ltd.) was added relative to 100 parts by weight of the solid content of the graft copolymer A. Table 4 shows the result.

### (EXAMPLE 18)

An impact modifier (G-18) was prepared, a molding was obtained, and the Charpy impact strength of the molding was measured by the same process as that in Example 1 except that the amount of potassium palmitate added was 0.2 parts by weight. Table 4 shows the result.

### (EXAMPLE 19)

An impact modifier (G-19) was prepared, a molding was obtained, and the Charpy impact strength of the molding was measured by the same process as that in Example 1 except that the amount of sodium alginate added was 2.0 parts by weight and potassium palmitate was not added. Table 4 shows the result.

### (EXAMPLE 20)

The Charpy impact strength was measured by the same process as that in Example 1 except that the number of parts of the impact modifier (G-1) mixed was 7 parts by weight.
Table 5 shows the result.

### (EXAMPLE 21)

The Charpy impact strength was measured by the same process as that in Example 1 except that the number of parts of the impact modifier (G-1) mixed was 5 parts by weight.
Table 5 shows the result.

### (COMPARATIVE EXAMPLE 1)

### (Preparation of graft copolymer L)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (75.62 parts by weight), AMA (0.38 parts by weight), and cumene hydroperoxide (0.1 parts by weight) was added dropwise to the mixture over a period of 4 hours. Furthermore, during the addition of the monomeric mixture, a 5 percent by weight aqueous solution containing 1 part by weight of sodium lauryl sulfate was continuously added over a period of 4 hours. After the monomeric mixture was added, stirring was continued for 1.5 hours to prepare an acrylate flexible polymer having a Tg of -54°C and a volume-average particle size of 0.14 µm. A mixture containing MMA (15.0 parts by weight) serving as a rigid polymer component and cumene hydroperoxide (0.05 parts by weight) was continuously added to the acrylate flexible polymer at 50°C over a period of 45 minutes. After the completion of the addition, cumene hydroperoxide (0.01 parts by weight) was added and stirring was continued for 1 hour to complete polymerization. The polymerization conversion of the monomer components was 99.3%. Thus, a latex of graft copolymer L having a content of flexible polymer of 85 percent by weight and a content of rigid polymer (Tg: 105°C) serving as the outermost part of 15 percent by weight was prepared.

### (Preparation of impact modifier G-20)

The process was performed as in Example 1 except that the latex of graft copolymer L was used and droplets of mixed latex were fed in a receiving tank containing an aqueous solution of calcium chloride at 30°C with a concentration of 1.0 percent by weight, the tank being disposed at the bottom of the tower.

A molding was obtained and the Charpy impact strength of the molding was measured by the same process as that in Example 1 except that this impact modifier G-20 was used.
Table 3 shows the result.

### (COMPARATIVE EXAMPLE 2)

### (Preparation of graft copolymer M)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (90.55 parts by weight), AMA (0.45 parts by weight), and cumene hydroperoxide (0.1 parts by weight) was added dropwise to the mixture over a period of 5 hours. Furthermore, during the addition of the monomeric mixture, a 5 percent by weight aqueous solution containing 1 part by weight of sodium lauryl sulfate was continuously added over a period of 5 hours. After the monomeric mixture was added, stirring was continued for 1.5 hours. Thus, a latex of graft copolymer M that had a content of flexible polymer of 100 percent by weight and that did not contain a rigid polymer was prepared. The graft copolymer M had a Tg of -54°C and a volume-average particle size of 0.17 µm. The polymerization conversion of the monomer components was 99.6%.

### (Preparation of impact modifier G-21)

The process was performed as in Example 1 except that the latex of graft copolymer M was used and droplets of mixed latex were fed in a receiving tank containing an aqueous solution of calcium chloride at 1°C with a concentration of 1.0 percent by weight, the tank being disposed at the bottom of the tower.

A molding was obtained and the Charpy impact strength of the molding was measured by the same process as that in Example 1 except that this impact modifier G-21 was used.
Table 3 shows the result.

### (COMPARATIVE EXAMPLE 3)

An impact modifier (G-22) was prepared, a molding was obtained, and the Charpy impact strength of the molding was measured by the same process as that in Example 1 except that the amount of sodium alginate added was 4.0 parts by weight and potassium palmitate was not added. Table 4 shows the result.

### (COMPARATIVE EXAMPLE 4)

An impact modifier (G-23) was prepared, a molding was obtained, and the Charpy impact strength of the molding was measured by the same process as that in Example 1 except that the amount of sodium alginate added was 0.005 parts by weight. Table 4 shows the result.

### (COMPARATIVE EXAMPLE 5)

An impact modifier (G-24) was prepared, a molding was obtained, and the Charpy impact strength of the molding was measured by the same process as that in Example 1 except that sodium alginate was not added. Table 4 shows the result.

### (COMPARATIVE EXAMPLE 6)

### (Preparation of graft copolymer N)

Deionized water (160 parts by weight) and sodium lauryl sulfate (0.05 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.96 parts by weight), AMA (0.04 parts by weight), and cumene hydroperoxide (0.01 parts by weight) was fed therein. After 10 minutes, a mixed solution prepared by dissolving disodium ethylenediaminetetraacetate (0.01 parts by weight) and ferrous sulfate heptahydrate (0.005 parts by weight) in distilled water (5 parts by weight); and sodium formaldehyde sulfoxylate (0.2 parts by weight) were fed therein. After the resulting mixture was stirred for 1 hour, a monomeric mixture containing BA (70.65 parts by weight), AMA (0.35 parts by weight), and cumene hydroperoxide (0.1 parts by weight) was added dropwise to the mixture over a period of 4 hours. Furthermore, during the addition of the monomeric mixture, a 5 percent by weight aqueous solution containing 1 part by weight of sodium lauryl sulfate was continuously added over a period of 4 hours. After the monomeric mixture was added, stirring was continued for 1.5 hours to prepare an acrylate flexible polymer having a Tg of -54°C and a volume-average particle size of 0.15 µm. A mixture containing MMA (20.0 parts by weight) serving as a rigid polymer component and cumene hydroperoxide (0.05 parts by weight) was continuously added to the acrylate flexible polymer at 50°C over a period of 60 minutes. After the completion of the addition, cumene hydroperoxide (0.01 parts by weight) was added and stirring was continued for 1 hour to complete polymerization. The polymerization conversion of the monomer components was 99.7%. Thus, a latex of graft copolymer N having a content of flexible polymer of 80 percent by weight and a content of rigid polymer (Tg: 105°C) serving as the outermost part of 20 percent by weight was prepared.

### (Preparation of impact modifier G-25)

The process was performed as in Example 1 except that the latex of graft copolymer N was used and droplets of mixed latex were fed in a receiving tank containing an aqueous solution of calcium chloride at 30°C with a concentration of 1.0 percent by weight, the tank being disposed at the bottom of the tower.

A molding was obtained and the Charpy impact strength of the molding was measured by the same process as that in Example 1 except that this impact modifier G-25 was used.
Table 5 shows the result.

### (COMPARATIVE EXAMPLE 7)

The Charpy impact strength was measured by the same process as that in Comparative Example 6 except that the number of parts of the impact modifier (G-25) mixed was 7 parts by weight. Table 5 shows the result.

### (COMPARATIVE EXAMPLE 8)

The Charpy impact strength was measured by the same process as that in Comparative Example 6 except that the number of parts of the impact modifier (G-25) mixed was 8 parts by weight. Table 5 shows the result.

Tables 1 and 2 show the compositions of flexible polymers in the graft copolymers, the volume-average particle sizes of the flexible polymer phase, the ratios by weight of the flexible polymer/rigid polymer serving as the outermost part, the types of water-soluble polymer compounds having the physical gel-forming property (the types of water-soluble polymers), the contents of the water-soluble polymer compounds having the physical gel-forming property (the contents of the water-soluble polymers), the types of anti-blocking agents, the contents of the anti-blocking agents, and the total amounts of the water-soluble polymer compound having the physical gel-forming property and the anti-blocking agent (the total amount of the water-soluble polymer and the anti-blocking agent) in the impact modifiers produced in the examples and the comparative examples.

**[Table 1]**

| | Graft copolymer | Compositionof flexible polymer | Volume- average particle size of flexible polymer (µm) | Flexible polymer/Rigid Type of polymer (Ratio by weight) | water-soluble polymer | Content of water-soluble polymer (Parts by weight) | Type of anti-blocking agent | Content of anti-blocking agent (Parts by weight) | Total amount of water-soluble polymer and anti-blocking agent (Parts by weight) |
|---|---|---|---|---|---|---|---|---|---|
| Example 1 | A | BA96.52 AMA 0.48 | 0.16 | 97/3 | Sodium alginate | 0.4 | Potassium palmitate | 1.5 | 1.9 |
| Example 2 | B | BA 89.55 AMA 0.45 | 0.15 | 90/10 | Sodium alginate | 0.4 | Potassium palmitate | 1.5 | 1.9 |
| Example 3 | C | BA 94.53 AMA 0.45 | 0.95 | 95/5 | Sodium alginate | 0.4 | Potassium palmitate | 1.5 | 1.9 |
| Example 4 | D | BA 96.52 AMA 0.48 | 0.17 | 99.5/0.5 | Sodium alginate | 0.4 | Potassium palmitate | 1.5 | 1.9 |
| Example 5 | E | BA 94.53 AMA 0.45 | 0.49 | 95/5 | Sodium alginate | 0.4 | Potassium palmitate | 1.5 | 1.9 |
| Example 6 | F | BA 93.53 SMA 1.00 MA 0.45 | 0.85 | 95/5 | Sodium alginate | 0.4 | Potassium palmitate | 1.5 | 1.9 |
| Example 7 | G | MMA 9.00 BA 87.56 AMA 0.44 | 0.18 | 97/3 | Sodium alginate | 0.4 | Potassium palmitate | 1.5 | 1.9 |
| Example 8 | H | SMA 9.65 BA86.87 AMA 0.48 | 0.20 | 97/3 | Sodium alginate | 0.4 | Potassium palmitate | 1.5 | 1.9 |
| Example 9 | I | 2-EHA 14.48 BA 82.09 AMA 0.48 | 0.17 | 97/3 | Sodium alginate | | Potassium 0.4 palmitate | 1.5 | 1.9 |
| Example 10 | J | 2-EHA 14.48 BA 82.04 AMA 0.48 | 0.15 | 97/3 | Sodium alginate | 0.4 | Potassium palmitate | 1.5 | 1.9 |
| Example 11 | K | 2-EHA 14.48 BA 82.04 AMA 0.48 | 0.21 | | Sodium 97/3 alginate | 0.4 | Potassium palmitate | 1.5 | 1.9 |
| Comparative Example 1 | L | BA 84.58 AMA 0.42 | 0.14 | 85/15 | Sodium alginate | 0.4 | Potassium palmitate | 1.5 | 1.9 |
| Comparative Example 2 | M | BA 99.50 AMA 0.50 | 0.17 | 100/0 | Sodium alginate | 0.4 | Potassium palmitate | 1.5 | 1.9 |

**[Table 2]**

| | Graft copolymer | Composition of flexible polymer | Volume- average particle size of flexible polymer (µm) | Flexible polymer/Rigid polymer (Ratio by weight) | Type of water- soluble polymer | Content of water- soluble polymer (Parts by by weight) | Type of anti- blocking agent | Content of anti-blocking agent (Parts by weight) | Total amount of water-soluble polymer and anti-blocking agent (Parts by weight) |
|---|---|---|---|---|---|---|---|---|---|
| Example 1 | A | BA 96.52 AMA 0.48 | 0.16 | 97/3 | Sodium alginate | 0.4 | Potassium palmitate | 1.5 | 1.9 |
| Example 12 | A | BA 96.52 AMA 0.48 | 0.16 | 97/3 | Sodium alginate | 0.01 | Potassium palmitate | 1.5 | 1.51 |
| Example 13 | A | BA 96.52 AMA 0.48 | 0.16 | 97/3 | Sodium alginate | 0.7 | Potassium palmitate | 1.0 | 1.7 |
| Example 14 | A | BA 96.52 AMA 0.48 | 0.16 | 97/3 | Sodium alginate | 1.8 | Potassium palmitate | 0.1 | 1.9 |
| Example 15 | A | BA 96.52 AMA 0.48 | 0.16 | 97/3 | Cellulos e-base | 0.4 | Potassium palmitate | 1.5 | 1.9 |
| Example 16 | A | BA 96.52 AMA 0.48 | 0.16 | 97/3 | Sodium alginate | 0.4 | Crosslinke d polymer | 1.0 | 1.4 |
| Example 17 | A | BA 96.52 AMA 0.48 | 0.16 | 97/3 | Sodium alginate | 0.4 | Silicone oil | 0.3 | 0.7 |
| Example 18 | A | BA 96.52 AMA 0.48 | 0.16 | 97/3 Sodium 97/3 | alginate | 0.4 | Potassium palmitate | 0.2 | 0.6 |
| Example 19 | A | BA 96.52 AMA 0.48 | 0.16 | 97/3 | Sodium alginate | 2.0 | - | - | 2.0 |
| Comparative Example 3 | A | BA 96.52 AMA 0.48 | 0.16 | 97/3 | Sodium alginate | 4.0 | - | - | 4.0 |
| Comparative Example 4 | A | BA 96.52 AMA 0.48 | 0.16 | 97/3 | Sodium alginate | 0.005 | Potassium palmitate | 1.5 | 1.505 |
| Comparative Example 5 | A | BA 96.52 AMA 0.48 | 0.16 | 97/3 | - | - | Potassium palmitate | 1.5 | 1.5 |

Tables 3 and 4 show the types of graft copolymers, the types of impact modifiers, and powder yields of the impact modifiers produced in the examples and the comparative examples. (In order to determine whether or not the impact modifiers obtained from mixed latices sprayed so as to have a droplet size of about 200 µm are coarsened or agglomerated, each of the impact modifiers was classified with a 16-mesh sieve, and the amount of the impact modifier passing through the sieve was defined as the powder yield. That is, the impact modifier that did not pass through the sieve was determined to be coarsened or agglomerated.) Tables 3 and 4 also show evaluation results of the impact resistance strengths (Charpy impact strength) of moldings obtained by blending the impact modifiers produced in the examples and the comparative examples with the thermoplastic resin, wherein each of the impact modifiers was not classified and the total of each impact modifier was blended.

**[Table 3]**

| | Type of graftcopolymer | Type of impact modifier | Powder yield % by weight | Charpy impact strength J/m² |
|---|---|---|---|---|
| Example 1 | A | G-1 | 100 | 30.2 |
| Example 2 | B | G-2 | 100 | 28.1 |
| Example 3 | C | G-3 | 100 | 29.7 |
| Example 4 | D | G-4 | 100 | 29.3 |
| Example 5 | E | G-5 | 100 | 26.7 |
| Example 6 | F | G-6 | 100 | 23.8 |
| Example 7 | G | G-7 | 100 | 28.1 |
| Example 8 | H | G-8 | 100 | 34.8 |
| Example 9 | I | G-9 | 100 | 33.7 |
| Example 10 | J | G-10 | 100 | 41.8 |
| Example 11 | K | G-11 | 100 | 38.7 |
| Comparative Example 1 | L | G-20 | 100 | 14.1 |
| Comparative Example 2 | M | G-21 | 98 | 15.6 |

**[Table 4]**

| | Type of graft copolymer | Type of impact modifier | Powder yield % by weight | Charpy impact strength J/m² |
|---|---|---|---|---|
| Example 1 | A | G-1 | 100 | 30.2 |
| Example 12 | A | G-12 | 99 | 30.4 |
| Example 13 | A | G-13 | 100 | 31.2 |
| Example 14 | A | G-14 | 100 | 28.7 |
| Example 15 | A | G-15 | 100 | 29.9 |
| Example 16 | A | G-16 | 100 | 30.2 |
| Example 17 | A | G-17 | 98 | 27.2 |
| Example 18 | A | G-18 | 98 | 31.9 |
| Example 19 | A | G-19 | 100 | 26.1 |
| Comparative Example 3 | A | G-22 | 100 | 16.1 |
| Comparative Example 4 | A | G-23 | 53 | 18.6 |
| Comparative Example 5 | A | G-24 | 25 | 16.3 |

Referring to Examples 1 to 4 and Comparative Examples 1 and 2, when the ratio by weight of flexible polymer/rigid polymer in the graft copolymer (b-1) is 90/10 to 99.5/0.5 (i.e., when the rigid polymer serving as the outermost part in the graft copolymer (b-1) is 0.5 to 10 percent by weight), high effect of improving impact resistance can be achieved.

Referring to Examples 3, 5, and 6, when the volume-average particle size of the flexible polymer phase of the graft copolymer is 0.01 to 1.0 µm, high effect of improving impact resistance can be achieved. As the volume-average particle size decreases, the effect of improving impact resistance tends to become excellent.

Referring to Examples 1 and 7, high effect of improving impact resistance can be achieved in both cases where the graft copolymer (b-1) has a structure including a (meth)acrylate flexible polymer phase serving as an inner layer and a rigid polymer phase serving as an outer layer, and where the graft copolymer (b-1) has a structure including a rigid polymer phase serving as the innermost layer, a (meth)acrylate flexible polymer phase serving as an interlayer, and a rigid polymer phase serving as the outermost layer.

Referring to Examples 1, 8, and 9, when the flexible polymer phase in the graft copolymer has a composition prepared by copolymerizing an alkyl (meth)acrylate whose alkyl group is a higher alkyl group (i.e., in Example 8, stearyl methacrylate whose alkyl group has 18 carbon atoms and, in Example 9, 2-ethylhexyl acrylate whose alkyl group has 8 carbon atoms), particularly high effect of improving impact resistance can be achieved.

Furthermore, referring to Examples 1, 10, and 11, when the flexible polymer phase in the graft copolymer has a two-layer structure and when the flexible polymer phase in the graft copolymer has an aggregated structure in addition to the two-layer structure, significantly high effect of improving impact resistance can be achieved.

Referring to Examples 1 and 12 to 19 and Comparative Examples 3 to 5, by incorporating 0.01 to 3.0 parts by weight of the water-soluble polymer compound (b-2) having the physical gel-forming property relative to 100 parts by weight of the graft copolymer (b-1), the graft copolymer (b-1) having a ratio by weight of flexible polymer/rigid polymer of 90/10 to 99.5/0.5 can be obtained without hardly forming coarsened or agglomerated particles. Thermoplastic resin compositions containing such a graft copolymer can highly exhibit the quality such as the effect of improving impact resistance.

Table 5 shows the types of graft copolymers, the compositions of flexible polymers of the graft copolymers in the impact modifiers, the volume-average particle sizes of the flexible polymer phase, the ratios by weight of the flexible polymer/rigid polymer serving as the outermost part, the types of impact modifiers, the powder yields, and the contents of the impact modifiers produced in the examples and the comparative examples. Table 5 also shows evaluation results of the impact resistance strength (Charpy impact strength) of moldings obtained by blending the impact modifiers produced in the examples and the comparative examples with the thermoplastic resin, wherein each of the impact modifiers was not classified and the total of each impact modifier was blended.

**[Table 5]**

| | Type of graft copolymer | Composition of flexible polymer | Volume-average particle size of flexible polymer (µm) | Flexible polymer/Rigid polymer (Ratio by weight) | Type of impact modifier | Powder yield % by weight | Content of impact modifier (Parts by weight) | Charpy strength J/m² |
|---|---|---|---|---|---|---|---|---|
| Example 1 | A | BA 96.52 AMA 0.48 | 0.16 | 97/3 | G-1 | 100 | 6 | 30.2 |
| Example 20 | A | BA 96.52 AMA 0.48 | 0.16 | 97/3 | G-1 | 100 | 7 | 42.0 |
| Example 21 | A | BA 96.52 AMA 0.48 | 0.16 | 97/3 | G-1 | 100 | 5 | 23.8 |
| Comparative Example 6 | N | BA 79.61 AMA 0.39 | 0.15 | 80/20 | G-25 | 100 | 6 | 13.2 |
| Comparative Example 7 | N | BA 79.61 AMA 0.39 | 0.15 | 80/20 | G-25 | 100 | 7 | 21.6 |
| Comparative Example 8 | N | BA 79.61 AMA 0.39 | 0.15 | 80/20 | G-25 | 100 | 8 | 29.8 |

Referring to Examples 1, 20, and 21 and Comparative Examples 6 to 8, the thermoplastic resin compositions of the present invention can exhibit high effect of improving impact resistance even when the number of parts of impact modifier mixed is smaller than that of the thermoplastic resin compositions of Comparative Examples 6 to 8.

Referring to the examples and the comparative examples, when the contents of the graft copolymer (b-1), the water-soluble polymer compound (b-2) having the physical gel-forming property, and the anti-blocking agent (b-4) satisfy the ranges specified in the present invention, thermoplastic resin compositions having significantly high effect of improving impact resistance can be obtained without deteriorating physical properties such as weather resistance and surface gloss of moldings. In other words, thermoplastic resin compositions having high impact resistance can be obtained even when the content of impact modifier is small.

## Claims

1. A thermoplastic resin composition comprising 100 parts by weight of a thermoplastic resin (a) and 0.5 to 20 parts by weight of an impact modifier (b) containing a graft copolymer (b-1) containing at least one (meth)acrylate flexible polymer phase having a glass transition temperature of lower than 20°C and a rigid polymer phase having a glass transition temperature of 20°C or higher serving as the outermost part of the graft copolymer, a water-soluble polymer compound (b-2) having a physical gel-forming property, and a gelling agent (b-3), wherein the content of the water-soluble polymer compound (b-2) having the physical gel-forming property is 0.01 to 3.0 parts by weight relative to 100 parts by weight of the graft copolymer (b-1) and the content of the rigid polymer phase serving as the outermost part in the graft copolymer (b-1) is 0.5 to 10 percent by weight, wherein the gelling agent (b-3) is an inorganic salt and/or an acid.

2. The thermoplastic resin composition according to claim 1, wherein the graft copolymer (b-1) comprises a (meth)acrylate flexible polymer phase serving as an inner layer and a rigid polymer phase serving as an outer layer.

3. The thermoplastic resin composition according to claim 1 or claim 2, wherein the graft copolymer (b-1) comprises a rigid polymer phase serving as the innermost layer, a (meth)acrylate flexible polymer phase serving as an interlayer, and a rigid polymer phase serving as the outermost layer.

4. The thermoplastic resin composition according to any one of claims 1 to 3, wherein the flexible polymer phase in the graft copolymer (b-1) is a flexible polymer phase prepared by polymerizing 50 to 100 percent by weight of a (meth)acrylic ester, 0 to 40 percent by weight of an aromatic vinyl monomer, 0 to 10 percent by weight of a vinyl monomer copolymerizable with the (meth)acrylic ester and the aromatic vinyl monomer, and 0.2 to 5 percent by weight of a multifunctional monomer, the flexible polymer phase having a volume-average particle size of 0.01 to 1.0 µm.

5. The thermoplastic resin composition according to any one of claims 1 to 4, wherein the flexible polymer phase in the graft copolymer (b-1) is a flexible polymer phase prepared by polymerizing 50 to 100 percent by weight of at least one alkyl (meth)acrylate selected from alkyl (meth)acrylates whose alkyl groups each have 1 to 22 carbon atoms, alkyl (meth)acrylates whose alkyl groups each have 1 to 22 carbon atoms and a hydroxyl group, and alkyl (meth)acrylates whose alkyl groups each have 1 to 22 carbon atoms and an alkoxyl group; 0 to 40 percent by weight of an aromatic vinyl monomer; 0 to 10 percent by weight of a vinyl monomer copolymerizable with the alkyl (meth)acrylate and the aromatic vinyl monomer; and 0.2 to 5 percent by weight of a multifunctional monomer, the flexible polymer phase having a volume-average particle size of 0.01 to 1.0 µm.

6. The thermoplastic resin composition according to any one of claims 1 to 5, wherein the flexible polymer phase in the graft copolymer (b-1) is a flexible polymer phase prepared by polymerizing 50 to 100 percent by weight of at least one alkyl (meth)acrylate selected from alkyl (meth)acrylates whose alkyl groups each have 1 to 12 carbon atoms, alkyl (meth)acrylates whose alkyl groups each have 1 to 12 carbon atoms and a hydroxyl group, and alkyl (meth)acrylates whose alkyl groups each have 1 to 12 carbon atoms and an alkoxyl group; 0 to 40 percent by weight of an aromatic vinyl monomer; 0 to 10 percent by weight of a vinyl monomer copolymerizable with the alkyl (meth)acrylate and the aromatic vinyl monomer; and 0.2 to 5 percent by weight of a multifunctional monomer, the flexible polymer phase having a volume-average particle size of 0.01 to 1.0 µm.

7. The thermoplastic resin composition according to any one of claims 1 to 6, wherein the rigid polymer phase serving as the outermost part in the graft copolymer (b-1) is a rigid polymer phase prepared by polymerizing a monomeric mixture containing 0 to 100 percent by weight of a (meth)acrylic ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylic ester, the aromatic vinyl monomer, and the vinyl cyanide monomer, the rigid polymer phase having a glass transition temperature of 20°C or higher.

8. The thermoplastic resin composition according to any one of claims 1 to 7, wherein the content of the rigid polymer phase serving as the outermost part in the graft copolymer (b-1) is 0.5 to 7 percent by weight.

9. The thermoplastic resin composition according to any one of claims 1 to 8, wherein the content of the rigid polymer phase serving as the outermost part in the graft copolymer (b-1) is 0.5 to 4 percent by weight.

10. The thermoplastic resin composition according to any one of claims 1 to 9, wherein the impact modifier (b) further comprises 0.05 to 3.0 parts by weight of an anti-blocking agent (b-4) relative to 100 parts by weight of the graft copolymer (b-1).

11. The thermoplastic resin composition according to any one of claims 1 to 10, wherein the impact modifier (b) comprises 0.05 to 1.8 parts by weight of the water-soluble polymer compound (b-2) having the physical gel-forming property relative to 100 parts by weight of the graft copolymer (b-1).

12. The thermoplastic resin composition according to claim 10 or claim 11, wherein the total content of the water-soluble polymer compound (b-2) having the physical gel-forming property and the anti-blocking agent (b-4) is 0.1 to 3.0 parts by weight relative to 100 parts by weight of the graft copolymer (b-1).

13. The thermoplastic resin composition according to any one of claims 10 to 12, wherein the total content of the water-soluble polymer compound (b-2) having the physical gel-forming property and the anti-blocking agent (b-4) is 0.5 to 2.0 parts by weight relative to 100 parts by weight of the graft copolymer (b-1).

14. The thermoplastic resin composition according to any one of claims 1 to 13, wherein the water-soluble polymer compound (b-2) having the physical gel-forming property is at least one compound selected from
hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

15. The thermoplastic resin composition according to any one of claims 10 to 14, wherein the anti-blocking agent (b-4) is a polyvalent metal salt of an anionic surfactant.

16. The thermoplastic resin composition according to any one of claims 10 to 14, wherein the anti-blocking agent (b-4) comprises 10 to 100 percent by weight of a crosslinked polymer prepared by polymerizing 30 to 60 percent by weight of methyl methacrylate, 65 to 35 percent by weight of an aromatic vinyl monomer, 0.1 to 25 percent by weight of a crosslinkable monomer, and 0 to 30 percent by weight of another copolymerizable monomer and 0 to 90 percent by weight of a lubricant.

17. The thermoplastic resin composition according to any one of claims 10 to 14, wherein the anti-blocking agent (b-4) is a silicone oil.

18. The thermoplastic resin composition according to claim 14, wherein the water-soluble polymer compound (b-2) having the physical gel-forming property is a water-soluble alginic acid derivative.

19. The thermoplastic resin composition according to any one of claims 1 to 18, wherein the flexible polymer phase in the graft copolymer (b-1) has a volume-average particle size of 0.01 to 0.5 µm.

20. The thermoplastic resin composition according to any one of claims 1 to 19, wherein the flexible polymer phase in the graft copolymer (b-1) has a volume-average particle size of 0.01 to 0.3 µm.

21. The thermoplastic resin composition according to any one of claims 1 to 20, wherein the content of the impact modifier (b) is 0.5 to 10 parts by weight.

22. The thermoplastic resin composition according to any one of claims 1 to 21, wherein the thermoplastic resin is a vinyl chloride resin.

## Patentansprüche

1. Eine thermoplastische Harzzusammensetzung, die 100 Gewichtsteile eines thermoplastischen Harzes (a) und 0,5 bis 20 Gewichtsteile eines Schlagzähigkeitsmodifikators (b) umfasst, der ein Pfropfcopolymer (b-1), das mindestens eine flexible (Meth)Acrylat Polymerphase mit einer Glasübergangstemperatur von weniger als 20°C und eine starre Polymerphase mit einer Glasübergangstemperatur von 20°C oder höher, die als äußerster Teil des Pfropfcopolymers dient, beinhaltet, eine wasserlösliche Polymerverbindung (b-2) mit einer physikalischen gelbildendenden Eigenschaft und ein Geliermittel (b-3) beinhaltet, wobei der Gehalt an wasserlöslicher Polymerverbindung (b-2) mit der physikalischen gelbildenden Eigenschaft 0,01 bis 3,0 Gewichtsteile, bezogen auf 100 Gewichtsteile des Pfropfcopolymers (b-1) beträgt und der Gehalt an starrer Polymerphase, die als äußerster Teil des Pfropfcopolymers (b-1) dient, 0,5 bis 10 Gew.-% beträgt, wobei das Geliermittel (b-3) ein anorganisches Salz und/oder eine Säure ist.

2. Die thermoplastische Harzzusammensetzung gemäß Anspruch 1, wobei das Pfropfcopolymer (b-1) eine flexible (Meth)Acrylat Polymerphase, die als innere Schicht dient, und eine starre Polymerphase, die als äußere Schicht dient, umfasst.

3. Die thermoplastische Harzzusammensetzung gemäß Anspruch 1 oder Anspruch 2, wobei das Pfropfcopolymer (b-1) eine starre Polymerphase, die als innerste Schicht dient, eine flexible (Meth)Acrylat Polymerphase, die als Zwischenschicht dient, und eine starre Polymerphase, die als äußerste Schicht dient, umfasst.

4. Die thermoplastische Harzzusammensetzung gemäß einem der Ansprüche 1 bis 3, wobei die flexible Polymerphase im Pfropfcopolymer (b-1) eine flexible Polymerphase ist, die durch Polymerisation von 50 bis 100 Gew.-% eines (Meth)Acrylesters, 0 bis 40 Gew.-% eines aromatischen Vinylmonomers, 0 bis 10 Gew.-% eines Vinylmonomers, das mit dem (Meth)Acrylester und dem aromatischen Vinylmonomer copolymerisierbar ist, und 0,2 bis 5 Gew.-% eines multifunktionalen Monomers hergestellt worden ist, wobei die flexible Polymerphase eine volumenmittlere Teilchengröße von 0,01 bis 1,0 µm aufweist.

5. Die thermoplastische Harzzusammensetzung gemäß einem der Ansprüche 1 bis 4, wobei die flexible Polymerphase im Pfropfcopolymer (b-1) eine flexible Polymerphase ist, die durch Polymerisation von 50 bis 100 Gew.-% mindestens eines Alkyl(meth)acrylats, ausgewählt aus Alkyl(meth)acrylaten, deren Alkylreste jeweils 1 bis 22 Kohlenstoffatome besitzen, Alkyl(meth)acrylaten, deren Alkylreste jeweils 1 bis 22 Kohlenstoffatome und eine Hydroxylgruppe besitzen und Alkyl(meth)acrylaten, deren Alkylreste jeweils 1 bis 22 Kohlenstoffatome und einen Alkoxylrest besitzen; 0 bis 40 Gew.-% eines aromatischen Vinylmonomers; 0 bis 10 Gew.-% eines Vinylmonomers, das mit dem Alkyl(meth)acrylat und dem aromatischen Vinylmonomer copolymerisierbar ist; und 0,2 bis 5 Gew.-% eines multifunktionalen Monomers hergestellt worden ist, wobei die flexible Polymerphase eine volumenmittlere Teilchengröße von 0,01 bis 1,0 µm aufweist.

6. Die thermoplastische Harzzusammensetzung gemäß einem der Ansprüche 1 bis 5, wobei die flexible Polymerphase im Pfropfcopolymer (b-1) eine flexible Polymerphase ist, die durch Polymerisation von 50 bis 100 Gew.-% mindestens eines Alkyl(meth)acrylats, ausgewählt aus Alkyl(meth)acrylaten, deren Alkylreste jeweils 1 bis 12 Kohlenstoffatomen besitzen, Alkyl(meth)acrylaten, deren Alkylreste jeweils 1 bis 12 Kohlenstoffatome und eine Hydroxylgruppe besitzen und Alkyl(meth)acrylaten, deren Alkylreste jeweils 1 bis 12 Kohlenstoffatome und einen Alkoxylrest besitzen; 0 bis 40 Gew.-% eines aromatischen Vinylmonomers; 0 bis 10 Gew.-% eines Vinylmonomers, das mit dem Alkyl(meth)acrylat und dem aromatischen Vinylmonomer copolymerisierbar ist; und 0,2 bis 5 Gew.-% eines multifunktionalen Monomers hergestellt worden ist, wobei die flexible Polymerphase eine volumenmittlere Teilchengröße von 0,01 bis 1,0 µm aufweist.

7. Die thermoplastische Harzzusammensetzung gemäß einem der Ansprüche 1 bis 6, wobei die starre Polymerphase, die als äußerster Teil des Pfropfcopolymers (b-1) dient, eine starre Polymerphase ist, die durch Polymerisation eines monomeren Gemisches aus 0 bis 100 Gew.-% eines (Meth)Acrylesters, 0 bis 90 Gew.-% eines aromatischen Vinylmonomers, 0 bis 25 Gew.-% eines Vinylcyanidmonomers und 0 bis 20 Gew.-% eines Vinylmonomers, das mit dem (Meth)Acrylester, dem aromatischen Vinylmonomer und dem Vinylcyanidmonomer copolymerisierbar ist, hergestellt worden ist, wobei die starre Polymerphase eine Glasübergangstemperatur von 20°C oder höher aufweist.

8. Die thermoplastische Harzzusammensetzung gemäß einem der Ansprüche 1 bis 7, wobei der Gehalt an starrer Polymerphase, die als äußerster Teil des Pfropfcopolymers (b-1) dient, 0,5 bis 7 Gew.-% beträgt.

9. Die thermoplastische Harzzusammensetzung gemäß einem der Ansprüche 1 bis 8, wobei der Gehalt an starrer Polymerphase, die als äußerster Teil des Pfropfcopolymers (b-1) dient, 0,5 bis 4 Gew.-% beträgt.

10. Die thermoplastische Harzzusammensetzung gemäß einem der Ansprüche 1 bis 9, wobei der Schlagzähigkeitsmodifikator (b) außerdem 0,05 bis 3,0 Gewichtsteile eines Antiblockmittels (b-4), bezogen auf 100 Gewichtsteile des Pfropfcopolymers (b-1) umfasst

11. Die thermoplastische Harzzusammensetzung gemäß einem der Ansprüche 1 bis 10, wobei der Schlagzähigkeitsmodifikator 0,05 bis 1,8 Gewichtsteile der wasserlöslichen Polymerverbindung (b-2) mit der physikalischen gelbildenden Eigenschaft, bezogen auf 100 Gewichtsteile des Pfropfcopolymers (b-1) umfasst.

12. Die thermoplastische Harzzusammensetzung gemäß Anspruch 10 oder 11, wobei der Gesamtgehalt an wasserlöslicher Polymerverbindung (b-2) mit der physikalischen gelbildenden Eigenschaft und an Antiblockmittel (b-4) 0,1 bis 3,0 Gewichtsteile bezogen auf 100 Gewichtsteile des Pfropfcopolymers (b-1) beträgt.

13. Die thermoplastische Harzzusammensetzung gemäß einem der Ansprüche 10 bis 12, wobei der Gesamtgehalt an wasserlöslicher Polymerverbindung (b-2) mit der physikalischen gelbildenden Eigenschaft und an Antiblockmittel (b-4) 0,5 bis 2,0 Gewichtsteile bezogen auf 100 Gewichtsteile des Pfropfcopolymers (b-1) beträgt.

14. Die thermoplastische Harzzusammensetzung gemäß einem der Ansprüche 1 bis 13, wobei die wasserlösliche Polymerverbindung (b-2) mit der physikalischen gelbildenden Eigenschaft mindestens eine aus
Hydroxyethylmethylcellulose, Hydroxypropylmethylcellulose, Carboxymethylcellulose, wasserlöslichen Derivaten der Alginsäure, Agar, Gelatine, Carrageen, Glucomannan, Pektin, Curdlan, Gellangummi und Derivaten der Polyacrylsäure ausgewählte Verbindung ist.

15. Die thermoplastische Harzzusammensetzung gemäß einem der Ansprüche 10 bis 14, wobei das Antiblockmittel (b-4) ein polyvalentes Metallsalz eines anionischen Tensids ist.

16. Die thermoplastische Harzzusammensetzung gemäß einem der Ansprüche 10 bis 14, wobei das Antiblockmittel (b-4) 10 bis 100 Gew.-% eines vernetzten Polymers, das durch Polymerisation von 30 bis 60 Gew.-% eines Methylmethacrylates, 65 bis 35 Gew.-% eines aromatischen Vinylmonomers, 0,1 bis 25 Gew.-% eines vernetzbaren Monomers und 0 bis 30 Gew.-% eines anderen copolymerisierbaren Monomers hergestellt worden ist, und 0 bis 90 Gew.-% eines Schmiermittels umfasst.

17. Die thermoplastische Harzzusammensetzung gemäß einem der Ansprüche 10 bis 14, wobei das Antiblockmittel (b-4) ein Silikonöl ist.

18. Die thermoplastische Harzzusammensetzung gemäß Anspruch 14, wobei die wasserlösliche Polymerverbindung (b-2) mit der physikalischen gelbildenden Eigenschaft ein wasserlösliches Derivat der Alginsäure ist.

19. Die thermoplastische Harzzusammensetzung gemäß einem der Ansprüche 1 bis 18, wobei die flexible Polymerphase im Pfropfcopolymer (b-1) eine volumenmittlere Teilchengröße von 0,01 bis 0,5 µm aufweist.

20. Die thermoplastische Harzzusammensetzung gemäß einem der Ansprüche 1 bis 19, wobei die flexible Polymerphase im Pfropfcopolymer (b-1) eine volumenmittlere Teilchengröße von 0,01 bis 0,3 µm aufweist.

21. Die thermoplastische Harzzusammensetzung gemäß einem der Ansprüche 1 bis 20, wobei der Gehalt an Schlagzähigkeitsmodifikator (b) 0,5 bis 10 Gewichtsteile beträgt.

22. Die thermoplastische Harzzusammensetzung gemäß einem der Ansprüche 1 bis 21, wobei das thermoplastische Harz ein Vinylchloridharz ist.

## Revendications

1. Composition de résine thermoplastique comprenant 100 parties en poids d'une résine thermoplastique (a) et 0,5 à 20 parties en poids d'un modificateur d'impact (b) contenant un copolymère greffé (b-1) contenant au moins une phase de polymère flexible de (méth)acrylate possédant une température de transition vitreuse inférieure à 20 °C et une phase de polymère rigide possédant une température de transition vitreuse supérieure ou égale à 20 °C servant de partie la plus externe du copolymère greffé, un composé polymère soluble dans l'eau (b-2) ayant une propriété physique de formation de gel et un agent gélifiant (b-3), dans laquelle la teneur en composé polymère soluble dans l'eau (b-2) ayant une propriété physique de formation de gel est de 0,01 à 3,0 parties en poids par rapport aux 100 parties en poids du copolymère greffé (b-1) et la teneur de la phase de polymère rigide servant de partie la plus externe dans le copolymère greffé (b-1) est de 0,5 à 10 % en poids, dans laquelle l'agent gélifiant (b-3) est un sel inorganique et/ou un acide.

2. Composition de résine thermoplastique selon la revendication 1, dans laquelle le copolymère greffé (b-1) comprend une phase de polymère flexible de (méth)acrylate servant de couche interne et une phase de polymère rigide servant de couche externe.

3. Composition de résine thermoplastique selon la revendication 1 ou 2, dans laquelle le copolymère greffé (b-1) comprend une phase de polymère rigide servant de couche la plus interne, une phase de polymère flexible de (méth)acrylate servant de couche intermédiaire et une phase de polymère rigide servant de couche la plus externe.

4. Composition de résine thermoplastique selon l'une quelconque des revendications 1 à 3, dans laquelle la phase de polymère flexible dans le copolymère greffé (b-1) est une phase de polymère flexible préparée par la polymérisation de 50 à 100 % en poids d'un ester (méth)acrylique, de 0 à 40 % en poids d'un monomère vinylique aromatique, de 0 à 10 % en poids d'un monomère vinylique copolymérisable avec l'ester (méth)acrylique et le monomère vinylique aromatique, et de 0,2 à 5 % en poids d'un monomère multifonctionnel, la phase de polymère flexible possédant une taille de particule moyenne en volume de 0,01 à 1,0 µm.

5. Composition de résine thermoplastique selon l'une quelconque des revendications 1 à 4, dans laquelle la phase de polymère flexible dans le copolymère greffé (b-1) est une phase de polymère flexible préparée par la polymérisation de 50 à 100 % en poids d'au moins un (méth)acrylate d'alkyle choisi parmi les (méth)acrylates d'alkyle dont les groupes alkyle comprennent chacun de 1 à 22 atomes de carbone, les (méth)acrylates d'alkyle dont les groupes alkyle comprennent chacun de 1 à 22 atomes de carbone et un groupe hydroxyle, et les (méth)acrylates d'alkyle dont les groupes alkyle comprennent chacun de 1 à 22 atomes de carbone et un groupe alcoxyle ; de 0 à 40 % en poids d'un monomère vinylique aromatique ; de 0 à 10 % en poids d'un monomère vinylique copolymérisable avec le (méth)acrylate d'alkyle et le monomère vinylique aromatique ; et de 0,2 à 5 % en poids d'un monomère multifonctionnel, la phase de polymère flexible possédant une taille de particule moyenne en volume de 0,01 à 1,0 µm.

6. Composition de résine thermoplastique selon l'une quelconque des revendications 1 à 5, dans laquelle la phase de polymère flexible dans le copolymère greffé (b-1) est une phase de polymère flexible préparée par la polymérisation de 50 à 100 % en poids d'au moins un (méth)acrylate d'alkyle choisi parmi les (méth)acrylates d'alkyle dont les groupes alkyle comprennent chacun de 1 à 12 atomes de carbone, les (méth)acrylates d'alkyle dont les groupes alkyle comprennent chacun de 1 à 12 atomes de carbone et un groupe hydroxyle, et les (méth)acrylates d'alkyle dont les groupes alkyle comprennent chacun de 1 à 12 atomes de carbone et un groupe alcoxyle ; de 0 à 40 % en poids d'un monomère vinylique aromatique ; de 0 à 10 % en poids d'un monomère vinylique copolymérisable avec le (méth)acrylate d'alkyle et le monomère vinylique aromatique ; et de 0,2 à 5 % en poids d'un monomère multifonctionnel, la phase de polymère flexible possédant une taille de particule moyenne en volume de 0,01 à 1,0 µm.

7. Composition de résine thermoplastique selon l'une quelconque des revendications 1 à 6, dans laquelle la phase de polymère rigide servant de partie la plus externe dans le copolymère greffé (b-1) est une phase de polymère rigide préparée par la polymérisation d'un mélange monomère contenant de 0 à 100 % en poids d'un ester (méth)acrylique, de 0 à 90 % en poids d'un monomère vinylique aromatique, de 0 à 25 % en poids d'un monomère de cyanure de vinyle et de 0 à 20 % en poids d'un monomère vinylique copolymérisable avec l'ester (méth)acrylique, le monomère vinylique aromatique et le monomère de cyanure de vinyle, la phase de polymère rigide possédant une température de transition vitreuse supérieure ou égale à 20 °C.

8. Composition de résine thermoplastique selon l'une quelconque des revendications 1 à 7, dans laquelle la teneur en phase de polymère rigide servant de partie la plus externe dans le copolymère greffé (b-1) est de 0,5 à 7 % en poids.

9. Composition de résine thermoplastique selon l'une quelconque des revendications 1 à 8, dans laquelle la teneur en phase de polymère rigide servant de partie la plus externe dans le copolymère greffé (b-1) est de 0,5 à 4 % en poids.

10. Composition de résine thermoplastique selon l'une quelconque des revendications 1 à 9, dans laquelle le modificateur d'impact (b) comprend en outre de 0,05 à 3,0 parties en poids d'un agent antiadhérent (b-4) par rapport aux 100 parties en poids du copolymère greffé (b-1).

11. Composition de résine thermoplastique selon l'une quelconque des revendications 1 à 10, dans laquelle le modificateur d'impact (b) comprend de 0,05 à 1,8 parties en poids du composé polymère soluble dans l'eau (b-2) possédant la propriété physique de formation de gel par rapport aux 100 parties en poids du copolymère greffé (b-1).

12. Composition de résine thermoplastique selon la revendication 10 ou la revendication 11, dans laquelle la teneur totale en composé polymère soluble dans l'eau (b-2) possédant la propriété physique de formation de gel et en agent antiadhérent (b-4) est de 0,1 à 3,0 parties en poids par rapport aux 100 parties en poids du copolymère greffé (b-1).

13. Composition de résine thermoplastique selon l'une quelconque des revendications 10 à 12, dans laquelle la teneur totale en composé polymère soluble dans l'eau (b-2) possédant la propriété physique de formation de gel et en agent antiadhérent (b-4) est de 0,5 à 2,0 parties en poids par rapport aux 100 parties en poids du copolymère greffé (b-1).

14. Composition de résine thermoplastique selon l'une quelconque des revendications 1 à 13, dans laquelle le composé polymère soluble dans l'eau (b-2) possédant la propriété physique de formation de gel est au moins un composé choisi parmi l'hydroxyéthylméthylcellulose, l'hydroxypropylméthylcellulose, la carboxyméthylcellulose, les dérivés de l'acide alginique solubles dans l'eau, l'agar-agar, la gélatine, le carraghénane, le glycomannane, la pectine, le curdlan, la gomme gellane et les dérivés de l'acide polyacrylique.

15. Composition de résine thermoplastique selon l'une quelconque des revendications 10 à 14, dans laquelle l'agent antiadhérent (b-4) est un sel de métal polyvalent d'un tensioactif anionique.

16. Composition de résine thermoplastique selon l'une quelconque des revendications 10 à 14, dans laquelle l'agent antiadhérent (b-4) comprend de 10 à 100 % en poids d'un polymère réticulé préparé par la polymérisation de 30 à 60 % en poids de méthacrylate de méthyle, de 65 à 35 % en poids d'un monomère vinylique aromatique, de 0,1 à 25 % en poids d'un monomère réticulable, et de 0 à 30 % en poids d'un autre monomère copolymérisable et de 0 à 90 % en poids d'un lubrifiant.

17. Composition de résine thermoplastique selon l'une quelconque des revendications 10 à 14, dans laquelle l'agent antiadhérent (b-4) est une huile de silicone.

18. Composition de résine thermoplastique selon la revendication 14, dans laquelle le composé polymère soluble dans l'eau (b-2) possédant la propriété physique de formation de gel est un dérivé de l'acide alginique soluble dans l'eau.

19. Composition de résine thermoplastique selon l'une quelconque des revendications 1 à 18, dans laquelle la phase de polymère flexible dans le copolymère greffé (b-1) possède une taille de particule moyenne en volume de 0,01 à 0,5 µm.

20. Composition de résine thermoplastique selon l'une quelconque des revendications 1 à 19, dans laquelle la phase de polymère flexible dans le copolymère greffé (b-1) possède une taille de particule moyenne en volume de 0,01 à 0,3 µm.

21. Composition de résine thermoplastique selon l'une quelconque des revendications 1 à 20, dans laquelle la teneur en modificateur d'impact (b) est de 0,5 à 10 parties en poids.

22. Composition de résine thermoplastique selon l'une quelconque des revendications 1 à 21, dans laquelle la résine thermoplastique est une résine de chlorure de vinyle.
